# EUROPÄISCHE PATENTSCHRIFT

(11) **EP 2 130 887 B1**
(45) Veröffentlichungstag und Bekanntmachung des Hinweises auf die Patenterteilung: **25.07.2018**
(21) Anmeldenummer: 09161263.0
(22) Anmeldetag: 27.05.2009
(51) Int. Cl.: B65H 19/10, C09J 7/29

(54) **Klebeband für den fliegenden Rollenwechsel**
Flying splice adhesive tape
Ruban adhésif de raccordement volant

(30) Priorität: 03.06.2008 DE 102008026443; 27.11.2008 DE 102008059385
(43) Veröffentlichungstag der Anmeldung: 09.12.2009
(73) Patentinhaber: tesa SE, 22848 Norderstedt (DE)
(72) Erfinder: Götz, Kerstin, 22547 Hamburg (DE); Nagel, Christoph, 22417 Hamburg (DE); Graefe, Ingeborg, 22359 Hamburg (DE)

(56) Entgegenhaltungen:
- DE-A1- 10 058 956
- DE-A1-102005 051 181
- DE-U1- 9 215 731

## Beschreibung

Die Erfindung betrifft ein Klebeband für den fliegenden Rollenwechsel von auf Rollen aufgewickeltem Flachbahnmaterial gemäß den Merkmalen des Oberbegriffs des Hauptanspruchs sowie ein Verfahren für den fliegenden Rollenwechsel von auf Rollen aufgewickeltem Flachbahnmaterial.
Bei der Verarbeitung von Flachbahnmaterial (Papier, Folien, Vliese oder dergleichen) ist der fliegende Rollenwechsel ein gängiges Verfahren, um eine alte, fast abgespulte Rolle durch eine neue Rolle zu ersetzen, ohne die schnell laufenden Maschinen dafür anhalten zu müssen. Bei derartigen fliegenden Rollenwechseln kommen häufig (Haft-)Klebebänder zum Einsatz, um das Ende der alten Bahn mit dem Anfang der neuen Bahn zu verbinden (zu "splicen" oder zu "spleißen", das Verfahren wird auch als "Spliceverfahren" oder "Spleißverfahren" bezeichnet).
Seit Jahren sind dabei Klebebänder bekannt, die in gerader Linie unter oder auf die oberste Lage der neuen Rolle verklebt werden und so die Funktion des Rollenverschlusses sowie die des Splice-Klebebands (Klebeband, das die neue Flachbahn (insbesondere eine Papierbahn) mit der alten, auslaufenden Flachbahn verbindet) in sich vereinigen.
Während des Splice-Vorganges muss der Rollenverschluss öffnen, um ein Anbinden der neuen Flachbahn an den Endbereich der auslaufenden Flachbahn zu ermöglichen, so dass nach dem Splice-Prozess die neue Flachbahn in kontinuierlicher Prozessführung von der neuen Rolle abläuft.
US 5,323,981 offenbart ein zweiseitiges Klebeband, das auf der Außenseite eine hochtackige Klebmasse für den fliegenden Rollenwechsel aufweist. Auf der Rückseite sind zwei Klebmassen positioniert, die vorteilhafterweise eine klebmassenfreie Zone zwischen den Klebmassen aufweist. Dabei wird die hintere Klebmasse, die permanent klebend ist, auf die oberste Lage der neuen Rolle verklebt und die vordere Klebmasse, die repositionierbar ist über die oberste Lage auf die 2. Lage verklebt. Die repositionierbare Klebmasse erfüllt bei dieser Variante die Aufgabe des Rollenverschlusses. Im Falle des fliegenden Rollenwechsels kommt es zum Kontakt der ablaufenden Bahn mit der neuen Rolle auf der Oberseite des Klebebandes. Die repositionierbare Klebmasse löst sich vom Material der 2. Lage und die neue Rolle wird in die Maschine eingezogen, gehalten durch die permanent klebende Klebmasse am Klebeband-Ende.
WO 95/29115 offenbart einähnliches Klebeband. Dieses zweiseitige Klebeband weist auf der Oberseite zwei Klebemassen, auf der Unterseite eine Klebmasse auf.
Dieses Klebeband wird unter die oberste Lage der neuen Rolle fixiert. Dabei hält die eine Klebmasse die oberste Lage fest. Die 2. Klebmasse ist für den Kontakt mit der ablaufenden Bahn zuständig. Auf der Rückseite ist auch eine repositionierbare Klebmasse, die im Falle des Splices die oberste Lage freigibt.
Beide Klebebänder weisen einen gemeinsamen Nachteil auf. Bei beiden läuft die repositionierbare Klebmasse offen durch die Veredelungsmaschine, so dass es zu Bahnverklebungen an Umlenkrollen oder Drucktüchern geben kann. Diese können dann zu Bahnabrissen führen.
Eine Verbesserung dieses Problems lehrte DE 196 28 317. Das Klebeband ist ähnlich dem von WO 95/29115 aufgebaut, allerdings ist die repositionierbare Klebmasse der Rückseite durch ein zweiseitiges Klebeband mit einem spaltfähigen Träger ersetzt. Im Falle des Splices spaltet der Träger und deckt mit den jeweiligen Spaltresten die Klebmassen so ab, dass diese nichtklebrig verbleiben. Damit werden störende Verklebungen beim Durchlauf durch die Veredelungsmaschinen verhindert.
Eine weitere Verbesserung lehrt DE 199 02 179. Dabei ist der Spaltstreifen von der vorderen Kante eingerückt. Durch diese Einrückung lässt sich die Spliceeffizienz deutlich steigern.
DE 198 41 609 beschreibt ein zweiseitig klebendes Haftelement. Der Träger besteht nicht aus einem einschichtigen Papier, sondern aus einem Papier/Papierverbund, der mit aushärtenden Klebepunkten verbunden ist. Dieses Klebeband wird auch unter die oberste Lage geklebt. Im Falle des Splices reißen die Klebepunkte Papierfasern aus einem der Verbundpapiere und so wird die oberste Lage freigegeben.
All diese Produkte weisen einen Nachteil auf. Das spaltbare System, sei es nun ein Papier, eine Verbund aus 2 Papieren, ein Papier / Folien Verbund, ein Verbund aus 2 Folien oder eine Polymerschicht die spaltet, zeigt einen Kraftpeak im Moment des Anspaltens dadurch begründet, dass das spaltbare System auf ganzer Breite gleichzeitig spaltet.
Besonders bei Verwendung des Spliceklebebandes auf gestrichenen Papieren, und hier besonders gestrichenen Tiefdruckpapieren, führen die Kraftspitzen immer wieder zum Versagen des Klebebandes. Das Versagen ist unter anderem darin begründet, dass die Spaltkräfte höher als die Verankerungskräfte des Papierstrichs sein können, dann trennt sich der Strich vom Papier. Oder die Spaltkräfte sind sogar höher als die innere Festigkeit des Papiers, dann kommt es zu Papierabrissen. In beiden Fällen misslingt der Splice.

Eine Verbesserung lehrt DE 100 58 956 A1. Um eine Kraftspitze zu vermeiden, ist der Spaltsstreifen zackig ausgeführt. Dabei deuten die Spitzen der Zacken in Laufrichtung des Prozesses, so dass im Moment des Splices die Spitze der Zacke zu spalten beginnt. Aufgrund der kleinen Fläche in der Spitze sind auch die Kraftwerte reduziert.
Dieses System weist allerdings den Nachteil auf, dass in der Spitze der Zacke die Verklebungsfläche gegen 0 geht. Somit reicht die Klebkraft in der Spitze nicht aus, um ein Spalten in der Spitze zu gewährleisten. Abhängig von der zu spaltenden Papierqualität kommt es zu einem Spalten unterhalb der Spitze, nämlich dort wo die Klebkräfte höher als die Spaltkräfte sind. Das heißt es laufen zum Teil ungespaltene Bestandteile des Spaltstreifens durch die Druck- oder Papierweiterverarbeitungsmaschine, die zu Verunreinigungen führen können. Da die Klebkräfte des spaltbaren Systems abhängig von der Papiertype sind, variiert die Größe dieser nichtgespaltenen Bestandteile und damit auch die Kraft, die zum Spalten benötigt wird.
Eine Verbesserung lehrt die DE 10 2005 051 181 A1. Hier ist der Spaltstreifen nicht zackig ausgeführt, sondern in den Spitzen abgerundet. Dies führt zu einer Vergrößerung der Klebefläche, die immer eine ausreichende Klebkraft generiert und dadurch ein sicheres Spalten gewährleistet.

Allerdings zeigen die nicht geraden Geometrien des spaltbaren Systems eine Schwäche. Beim Abrollen des Klebebandes mit dem spaltbaren System von einer Klebebandrolle kommt es zu Spannungen an den quer zur Abwickelrichtung stehenden Anlaufkanten des spaltenden Systems und in einigen Fällen zum Anspalten des Spaltstreifens. Das frühzeitige Anspalten tritt vor allem bei Wellenformen bzw. Geometrien auf, die sich durch eine hohe Steigung der Geometrie auszeichnen. Da das spaltende System ein zusammenhängendes Flächengebilde darstellt, kann das unerwünschte Anspalten über eine längere Strecke des spaltbaren Systems laufen. Besonders kritisch ist es in den Fällen, in denen es nicht vom Anwender bemerkt wird, da die Spliceperformance sinkt. Bemerkt der Anwender das Anspalten, muss das Klebeband neu appliziert werden, was zeitaufwendig ist und die Produktivität negativ beeinflusst.

Aufgabe der Erfindung ist es, ein Klebeband anzubieten, welches die Nachteile des Standes der Technik vermeidet und insbesondere ein zuverlässiges Abrollen von der Klebebandrolle und Applizieren des Klebebandes ohne frühzeitiges Anspalten ermöglicht.

Gelöst wird die Aufgabe durch ein Klebesystem für den fliegenden Rollenwechsel - "Trennsystem" genannt -, das geeignet ist, eine Klebeverbindung auf einem Substrat zu bewirken, die derart wieder trennbar ist, dass weder auf der Unterseite (U_{K}) des Klebebandes (K) noch auf dem Substrat im Bereich der getrennten Klebeverbindung klebende Rückstände verbleiben,
wobei das Trennsystem (S) seinerseits einen Träger (T) ("Systemträger") umfasst, der auf seiner Oberseite (O_{T}) und seiner Unterseite (U_{T}) jeweils mit einer Klebemassenschicht (M_{O}, M_{U}) versehen und flächig spaltbar oder delaminierbar ist, wobei der Systemträger (T) ein einlagiges Papier oder ein Verbund aus mindestens zwei Papierschichten, ein Verbund aus mindestens zwei Folienschichten oder ein Verbund aus mindestens einer Papierschicht und mindestens einer Folienschicht ist,
wobei zumindest die rechte Begrenzungskante (r_{S}) des Trennsystems (S) auf der Klebebandunterseite (U_{K}) in Form einer sich entlang einer geraden Basislinie (X) erstreckenden Kurve (F) - "rechte Kurve" genannt - ausgebildet ist, die durch eine Abfolge von ansteigenden (s) und abfallenden (f) Kurvenabschnitten charakterisiert ist,
so dass zwischen einem jeweiligen ansteigenden Kurvenabschnitt (s) und einem in einer Vorzugsrichtung (v) darauf folgenden abfallenden Kurvenabschnitt (f) im für den durch diese beiden Kurvenabschnitte gebildeten Kurvenbereich ein am weitesten rechts liegender Punkt (Eₘₐₓ) - "Maximum" genannt - oder eine Mehrzahl direkt benachbarter am weitesten rechts liegender Punkte (Bₘₐₓ) - "Maximumsbereich" genannt - gebildet wird,
und so dass zwischen einem jeweiligen abfallenden Kurvenabschnitt (f) und einem in der Vorzugsrichtung (v) darauf folgenden ansteigenden Kurvenabschnitt (s) im für den durch diese beiden Kurvenabschnitte gebildeten Kurvenbereich ein am weitesten links liegender Punkt (Eₘᵢₙ) - "Minimum" genannt - oder eine Mehrzahl direkt benachbarter am weitesten links liegender Punkte (Bₘᵢₙ) - "Minimumsbereich" genannt - gebildet wird, wobei für die Mehrzahl der durch einen jeweiligen ansteigenden Kurvenabschnitt (s), ein jeweils darauf folgendes Maximum (Eₘₐₓ) bzw. einen jeweils in der Vorzugsrichtung (v) darauf folgenden Maximumsbereich (Bₘₐₓ) und einen jeweils in der Vorzugsrichtung (v) darauf wieder folgenden abfallenden Kurvenabschnitt (f) gebildeten Kurvenbereiche (R) - "rechts vorspringender Kurvenbereich" genannt - gilt, dass die Steilheit im ansteigenden Kurvenabschnitt (s) geringer ist als die Steilheit im in der Vorzugsrichtung (v) darauf folgenden abfallenden Kurvenabschnitt (f), wobei die Steilheit (im Sinne dieser Schrift) eines Kurvenabschnitts den Betrag der Steigung einer Geraden - "Steilheitsgerade" genannt - durch die zwei den Kurvenabschnitt begrenzenden Kurvenpunkte bedeutet.

Die Steilheit eines Kurvenabschnitts entspricht damit mathematisch dem Mittelwert der ersten Ableitung des Kurvenabschnitts, soweit sich der Kurvenabschnitt als Riemann-Integral seiner ersten Ableitung darstellen lässt.

Als noch besser geeignet haben sich Klebebänder mit einer linken und einer rechten Begrenzungskante, umfassend zumindest einen Hauptträger und eine erste Selbstklebemassenschicht auf der Oberseite des Klebebandes für den dargestellten Einsatzzweck (fliegender Rollenwechsel), wobei auf der Unterseite des Klebebandes zumindest ein Klebesystem der vorgenannten Art (ein Trennsystem) vorgesehen ist.

Gegenstand der Erfindung ist dementsprechend insbesondere auch ein Klebeband, das für den fliegenden Rollenwechsel geeignet ist, mit einer linken und einer rechten Begrenzungskante, umfassend zumindest einen Hauptträger und eine erste Selbstklebemassenschicht auf der Oberseite des Klebebandes, wobei auf der Unterseite des Klebebandes zumindest ein System - "Trennsystem genannt" - vorgesehen ist, das geeignet ist, eine Klebeverbindung auf (Klebefügung zu) einem Substrat zu bewirken, die derart wieder lösbar (trennbar) ist, dass weder auf der Unterseite des Klebebandes noch auf dem Substrat im Bereich der gelösten (getrennten) Klebeverbindung klebende Rückstände verbleiben,
wobei zumindest die rechte Begrenzungskante des Systems auf der Klebebandunterseite in Form einer sich entlang einer geraden Basislinie erstreckenden Kurve ausgebildet ist, die durch eine Abfolge von ansteigenden und abfallenden Kurvenabschnitten charakterisiert ist,
so dass zwischen einem jeweiligen ansteigenden Kurvenabschnitt und einem in einer Vorzugsrichtung darauf folgenden abfallenden Kurvenabschnitt im für den durch diese beiden Kurvenabschnitte gebildeten Kurvenbereich ein am weitesten rechts liegender Punkt (Maximum) oder eine Mehrzahl direkt benachbarter am weitesten rechts liegender Punkte (Maximumsbereich) gebildet wird,
und so dass zwischen einem jeweiligen abfallenden Kurvenabschnitt und einem in der Vorzugsrichtung darauf folgenden ansteigenden Kurvenabschnitt im für den durch diese beiden Kurvenabschnitte gebildeten Kurvenbereich ein am weitesten links liegender Punkt (Minimum) oder eine Mehrzahl direkt benachbarter am weitesten links liegender Punkte (Minimumsbereich) gebildet wird,
wobei für die Mehrzahl der durch einen jeweiligen ansteigenden Kurvenabschnitt, ein jeweils darauf folgendes Maximum bzw. einen jeweils in der Vorzugsrichtung darauf folgenden Maximumsbereich und einen jeweils in der Vorzugsrichtung darauf wieder folgenden abfallenden Kurvenabschnitt gebildeten Kurvenbereiche (rechts vorspringender Kurvenbereich) gilt, dass die Steilheit im ansteigenden Kurvenabschnitt geringer ist als die Steilheit im in der Vorzugsrichtung darauf folgenden abfallenden Kurvenabschnitt, wobei die Steilheit (im Sinne dieser Schrift) eines Kurvenabschnitts den Betrag der Steigung einer Geraden (Steilheitsgeraden) durch die zwei den Kurvenabschnitt begrenzenden Kurvenpunkte bedeutet.
Die mathematische Beschreibung der Kurve (Maximum, Minimum, Ableitung) erfolgt anhand eines rechtshändischen, kartesischen (orthogonalen) Koordinatensystems, welches bezüglich des Klebebandes definiert ist.
"Erstreckung entlang einer geraden Basislinie" bedeutet insbesondere, dass die Kurve durch die Basislinie derart geteilt wird, dass der Gesamtflächeninhalt der auf einer Seite ("oberhalb") der Basislinie liegenden Flächen, die durch die die Basislinie darstellende Gerade und die Kurve selbst eingeschlossenen werden, und der Gesamtflächeninhalt der auf der anderen Seite ("unterhalb") der Basislinie liegenden Flächen, die durch die die Basislinie bildende Gerade und die Kurve eingeschlossenen sind, identisch sind.

Die x-Achse (Abszisse) dieses Koordinatensystems (Achsenkreuzes) verläuft in Längsrichtung des Klebebandes, die y-Achse (Ordinate) zeigt von der linken zur rechten Klebebandkante, und die z-Achse (Applikate) zeigt von der Oberseite zur Unterseite des Klebebandes (z-Richtung).
Diese Lage des Achsenkreuzes bietet sich an, da das Trennsystem bei Aufsicht auf die Unterseite des Klebebandes sichtbar ist und am besten aus diesem Blickwinkel beschrieben werden kann. Zur Darstellung ist in den Figuren das Koordinatensystem jeweils mit punktierten Linien eingezeichnet.

Die rechte Seite ist somit durch die positive y-Richtung des Koordinatensystems definiert. Die Vorzugsrichtung entspricht insbesondere der x-Richtung des vorgenannten Koordinatensystems.

Es ist insbesondere für die Lösung der Aufgabe vorteilhaft, wenn nicht nur der Betrag der mathematisch gemittelte Steigung des ansteigenden Kurvenabschnitts geringer ist als derjenige des abfallenden Kurvenabschnitts, sondern wenn für die Mehrzahl aller ansteigenden Kurvenabschnitte, insbesondere vorteilhaft für alle ansteigenden Kurvenabschnitte, gilt, dass
für eine Vielzahl der Kurvenpunkte des ansteigenden Kurvenabschnitts der Betrag der Steigung der Kurve (also der Betrag des Wertes der Ableitung der Kurve in diesem Punkt) kleiner ist als der Betrag der Steigung (Betrag des Ableitungswertes) in dem Punkt mit demselben y-Wert des in Vorzugsrichtung nachfolgenden abfallenden Kurvenabschnitt.

Bevorzugt weist eine Vielzahl der ansteigenden Kurvenabschnitte, besser die Mehrzahl aller ansteigenden Kurvenpunkte, noch besser alle ansteigenden Kurvenabschnitte einen oder mehrere Teil-Kurvenabschnitte auf, für deren Kurvenpunkte jeweils gilt, dass dort der Betrag der Steigung der Kurve (also der Betrag des Wertes der Ableitung der Kurve in diesem Punkt) kleiner ist als der Betrag der Steigung (Betrag des Ableitungswertes) in dem Punkt mit demselben y-Wert des in Vorzugsrichtung nachfolgenden abfallenden Kurvenabschnitt.

Bevorzugt macht die Ausdehnung in y-Richtung - auch y-Ausdehnung genannt - des bzw. der Teil-Kurvenabschnitte insgesamt mindestens 50 %, besser 75 %, noch besser 90 % der y-Ausdehnung des ansteigenden Kurvenabschnitts bzw. des in Vorzugsrichtung nachfolgenden abfallenden Kurvenabschnitts aus, je nachdem welche dieser beiden y-Ausdehnungen die kleinere ist.
Noch mehr bevorzugt macht die y-Ausdehnung des bzw. der Teil-Kurvenabschnitte insgesamt mindestens 50 %, besser 75 %, noch besser 90 % der y-Ausdehnung des ansteigenden Kurvenabschnitts aus, selbst wenn dieser Kurvenabschnitt die kleinere y-Ausdehnung aufweist.

Als Maxima werden im Sinne der Erfindung die - bezogen auf das Trennsystem - am weitesten außen liegenden Kurvenpunkte bezeichnet, also definitionsgemäß die am weitesten rechts liegenden Punkte der Kurve. Als Minima werden die am weitesten innen (also am weitesten links) liegenden Kurvenpunkte bezeichnet.

Im Falle einer unregelmäßigen (insbesondere nicht periodischen) Kurvenform bezeichnet der Begriff "Maximum" die jeweiligen lokal am weitesten außen (rechts) liegenden Kurvenpunkte eines jeden Kurvenabschnitts, also solche Punkte, deren direkte Nachbarpunkte beide weiter innen (links) liegen; entsprechend bezeichnet der Begriff "Minimum" die jeweiligen lokal am weitesten innen (links) liegenden Kurvenpunkte eines jeden Kurvenabschnitts, also solche Punkte, deren direkte Nachbarpunkte weiter außen (rechts) liegen, während auf dem ansteigenden bzw. abfallenden Kurvenabschnitt "lokale Maxima" und "lokale Minima" auftreten können.
"Am weitesten rechts" ist dabei also auf den jeweiligen, durch den ansteigenden Kurvenabschnitt, das Maximum bzw. den Maximumbereich und den abfallenden Kurvenabschnitt gebildeten Kurvenbereich (jeweiliger rechts vorspringender Kurvenbereich) bezogen; es soll damit nicht ausgeschlossen werden, dass bezüglich der ganzen Kurve in einem oder mehreren anderen Kurvenbereichen Maxima und/oder Maximumbereiche auftreten, die absolut gesehen weiter rechts liegen. Dementsprechend ist "am weitesten links" auf den jeweiligen, durch einen jeweiligen abfallenden Kurvenabschnitt, das in der Vorzugsrichtung darauf folgende Minimum bzw. den entsprechenden Minimumbereich und den in der Vorzugsrichtung darauf wieder folgenden ansteigenden Kurvenabschnitt gebildeten Kurvenbereich ("links vorspringender Kurvenbereich") bezogen; es soll damit nicht ausgeschlossen werden, dass bezüglich der ganzen Kurve in einem oder mehreren anderen Kurvenbereichen Minima und/oder Minimumbereiche auftreten, die absolut gesehen weiter links liegen.

Für die Mehrzahl der rechts vorspringenden Kurvenbereiche ist erfindungsgemäß vorgegeben, dass der ansteigende Kurvenabschnitt eine geringere Steilheit aufweist (flacher verläuft) als der in Vorzugsrichtung folgende abfallende Kurvenabschnitt. Sowohl für die rechte Begrenzungskante als somit auch für das Klebeband ist deshalb keine Spiegelachse zu finden, die parallel zu der y-Achse verläuft.
Bevorzugt gilt für über 50 %, mehr bevorzugt für mindestens 75 %, noch mehr bevorzugt für mindestens 90 % und am besten für alle rechts vorspringenden Kurvenbereiche, dass der ansteigende Kurvenabschnitt eine geringere Steilheit aufweist (flacher verläuft) als der in Vorzugsrichtung folgende abfallende Kurvenabschnitt.

Insbesondere vorteilhaft ist es, wenn für über 50 %, bevorzugt für mindestens 75 %, mehr bevorzugt für mindestens 90 %, am besten für alle linken vorspringenden Kurvenbereiche gilt, dass die Steilheit in dem abfallenden Kurvenabschnitt höher ist als die Steilheit im in der Vorzugsrichtung darauf folgenden ansteigenden Kurvenabschnitt.

Die ansteigenden und/oder die abfallenden Kurvenabschnitte können so ausgestaltet sein, dass sie zumindest über einen Teilbereich linear oder im wesentlichen linear verlaufen; sie können aber auch - unabhängig voneinander - so ausgestaltet sein, dass sie einen oder mehrere Wendepunkte aufweisen. Dies ist insbesondere der Fall, wenn die Maxima und/oder die Minima nicht sehr spitz, sonder eher abgeflacht ausgebildet sind, und insbesondere im abfallenden Kurvenabschnitt.

Im Extremfall ist die Kurve so geformt, dass der abfallende Abschnitt senkrecht (parallel zur y-Achse) verläuft oder in einem oder mehreren Teilabschnitten senkrecht verläuft.

In einer ersten vorteilhaften Ausgestaltung der Erfindung steigen die ansteigenden Kurvenabschnitte monoton an und/oder fallen die abfallenden Kurvenabschnitte monoton ab, eine Weiterentwicklung dieser Variante zeichnet sich dadurch aus, dass die Kurvenabschnitte streng monoton ansteigen bzw. abfallen.

Eine zweite Variante der Erfindung ist derart gestaltet, dass die Abschnitte keine Monotonie im Verlauf aufweisen, so dass im Anstieg und/oder im Abfall lokale Maxima und Minima (und/oder lokale Maximumsbereiche und/oder Minimumsbereiche) auftreten. Der Erfindung ist aber dann genüge getan, wenn über definierte Kurvenabschnitte insgesamt ein Ansteigen bzw. Abfallen der erfindungsgemäß genannten Definition auftritt, wenn also über den jeweils betrachteten Kurvenabschnitt insgesamt ein Anstieg bzw. ein Abfall festzustellen ist und die Bedingung über deren Steilheitsverhältnisse erfüllt ist.

Auch Wende- und/oder Sattelpunkte sind im Verlauf der ansteigenden bzw. abfallenden Kurvenabschnitte möglich.

Selbstverständlich werden von der Erfindung auch solche Ausführungsformen erfasst, in denen gleichzeitig sowohl monoton als auch nicht monoton ansteigende und/oder sowohl monoton als auch nicht monoton abfallende Kurvenabschnitte auftreten, sofern die Bedingungen bezüglich der Steilheitsverhältnisse der Kurvenabschnitte erfüllt sind.

Die Maxima und/oder Minima können - in bevorzugter Weise - derart ausgebildet sein, dass die Kurve zumindest im Extremwertbereich differenzierbar ist, so dass das Maximum bzw. Minimum durch einen "runden" Kurvenverlauf gekennzeichnet ist (und die Kurve somit zumindest im Extremwertbereich einer Welle entspricht, wobei der Kurvenverlauf durch das Maximum einem Wellenberg bzw., einem Wellental entspricht); sie können aber auch derart ausgebildet sein, dass die Kurve dort nicht differenzierbar ist, so dass im Maximum und/oder im Minimum eine Spitze vorliegt (und die Kurve somit zumindest im Extremwertbereich eher einer Zackenkurve entspricht).

Auch der Übergang des ansteigenden Abschnitts in einen Maximumsbereich, der Übergang eines Maximumsbereich in einen abfallenden Abschnitt, der Übergang eines abfallenden Abschnitts in einen Minimumsbereich und/oder der Übergang eines Minimumsbereichs in einen ansteigenden Bereich kann jeweils durch einen differenzierbaren oder durch einen nicht differenzierbaren Kurvenverlauf gekennzeichnet sein. Für die Maximums- und Minimumsbereiche gilt, dass die ersten Ableitungen hier monoton, aber nicht streng monoton verlaufen (der Wert der ersten Ableitung ist Null für alle Punkte des Maximums- bzw. Minimumsbereichs).
Die Ausgestaltung der einzelnen Maxima, Minima, Maximumsbereiche und Minimumsbereiche kann jeweils unabhängig von den anderen Grenzwerten einer der vorgenannten Bedingungen gehorchen.

Die rechte Kurve (F) kann insbesondere auch derart ausgebildet sein, dass sie stets (also über ihren gesamten Verlauf) differenzierbar ist.

Ganz besonders bevorzugt ist ein Klebeband, bei dem die flachen (geringere Steilheit) und die steilen (größere Steilheit) Abschnitte derart aufeinander abfolgen, dass auf einen flachen (ansteigenden) Kurvenabschnitt ein steilerer (abfallender) folgt, darauf wieder ein ansteigender mit geringerer Steilheit als der vorhergehende abfallende Kurvenabschnitt, darauf wieder ein abfallender, der wiederum steiler als der vorhergehende ansteigende Kurvenabschnitt verläuft und so fort.

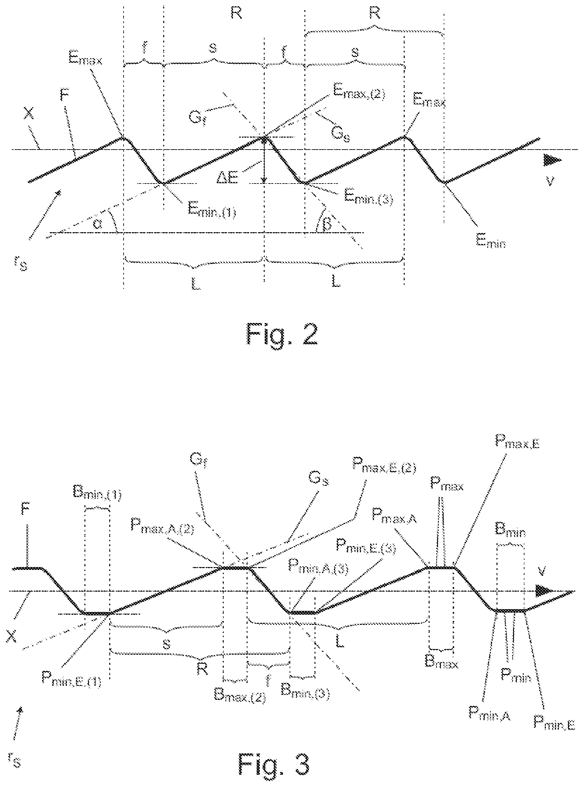

Im erfindungsgemäßen Sinne ganz herausragend ist ein solches Klebeband, bei dem die flachen und die steilen Kurvenabschnitte periodisch abwechseln; und hier insbesondere solche Kurven, bei denen alle Maxima und Minima differenzierbar sind; noch vorteilhafter solche, bei denen insbesondere der gesamte Kurvenverlauf differenzierbar ist [unregelmäßige oder regelmäßige Wellenform; insbesondere mit identischen Wellenbergen (rechts vorspringenden Kurvenbereichen) und identischen Wellentälern (links vorspringenden Kurvenbereichen) - regelmäßige Wellenform, wie sie als Beispiel in der Figur 2 skizziert ist].

Eine erfindungsgemäß vorteilhafte Ausführungsform ist derart ausgebildet, dass zumindest die rechte Begrenzungskante des Trennsystems auf der Klebebandunterseite im wesentlichen in Form einer Wellenlinie ausgebildet ist, wobei sich die Steilheiten des Anstiegs eines jeden Wellenberges (rechts vorspringender Kurvenbereich) und des Abfalls eines jeden Wellenberges unterscheiden, wobei der ansteigende Kurvenabschnitt jeweils flacher verläuft als der jeweils nachfolgende abfallende Kurvenabschnitt.

Zur Beschreibung der Erfindung ist es nützlich, die Dimensionen und Richtungen des erfindungsgemäßen Klebebandes zu definieren. Hierzu dienen die folgenden Abbildungen, die die Erfindung lediglich schematisch darstellen sollen, aber bezüglich der einzelnen Ausführungsformen keine Einschränkungen bedeuten, wobei insbesondere die dort dargestellte Wellenform des Trennsystems (S) auf der Klebebandunterseite nur beispielhaft dargestellt ist:

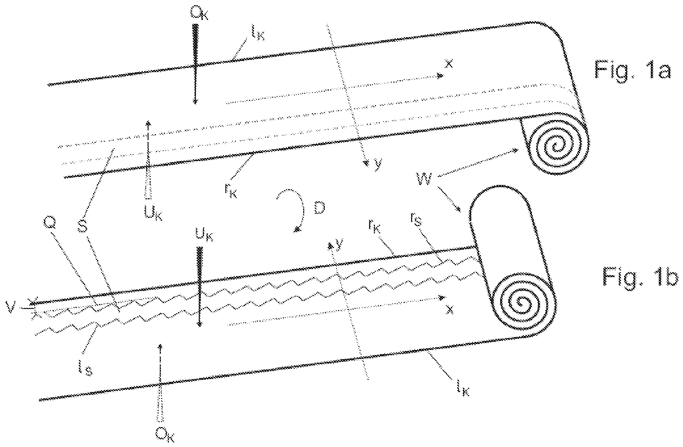

Figur 1a Aufsicht auf das Klebeband von oben,
Figur 1b Aufsicht auf das Klebeband von unten,

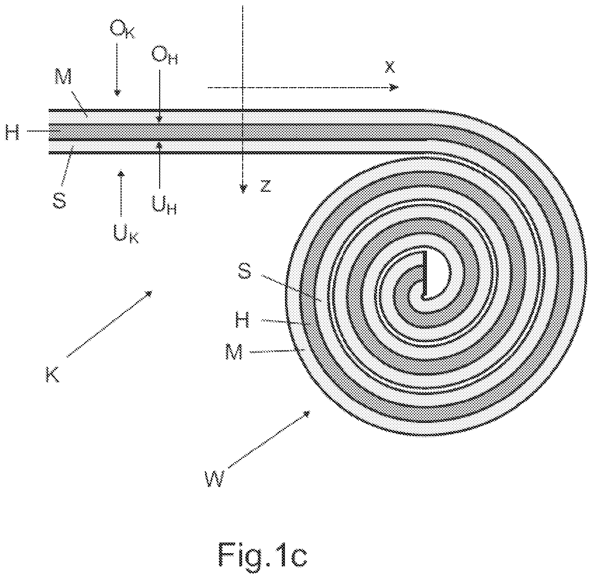

Figur 1c Querschnitt des Klebebandes in Längsrichtung (x-Richtung) und

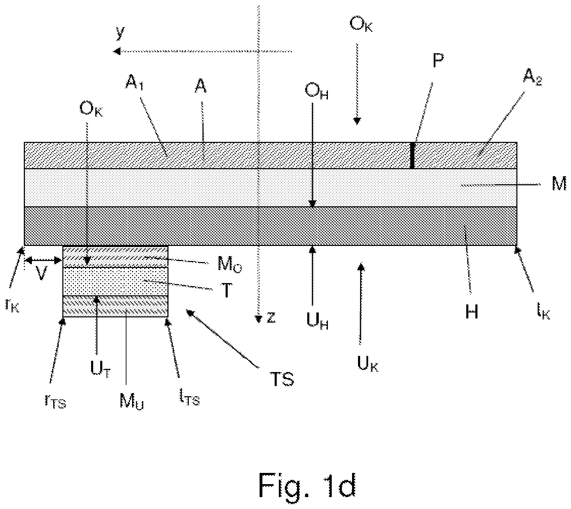

Figur 1d Querschnitt des Klebebandes in Querrichtung (y-Richtung).
Das Klebeband (K) umfasst zunächst einen Hauptträger (H), der auf seiner Oberseite (O_{H}) mit einer Selbstklebemasse (M) versehen ist (in den Figuren 1a und 1b nicht separat dargestellt). Die Oberseite (O_{K}) des Klebebandes (K) und die Oberseite (O_{H}) des Hautträgers (H) liegen dabei auf derselben Seite (oben); entsprechendes gilt für die Unterseiten (U_{K}, U_{H}) des Klebebandes (K) und des Hauptträgers (H) (jeweils unten) - vgl. hierzu Figur 1c.
Figur 1a zeigt eine Aufsicht auf ein solches Klebeband von oben, so dass die mit der Selbstklebemasse versehene Oberseite (O_{K}) des Klebebandes (K) in der Abbildung der Figur 1a oben liegt. Auf der Unterseite (U_{K}) des Klebebandes ist das Trennsystem (S) vorgesehen. In Figur 1a ist dieses Trennsystem (S) linear gestrichelt und nur dem Verlauf nach schematisch dargestellt, da es unterhalb des Klebebandes und somit im nicht sichtbaren Bereich liegt.

Das Klebeband kann zur Rolle (W) gewickelt werden, wobei die Oberseite (O_{K'}) des Klebebandes (K) die Außenseite einer jeweiligen Wicklung und die Unterseite (U_{K}) des Klebebandes (K) die Innenseite einer jeweiligen Wicklung darstellt (vgl. parallel auch Figur 1c). In der Figur 1c ist gezeigt, dass an der Oberseite (O_{K}) des Klebebandes (K) optional eine Abdeckung (A), insbesondere aus einem Trennmaterial, vorgesehen sein kann; die insbesondere dazu geeignet ist, das Klebeband handhaben zu können, insbesondere bei der Aufwicklung des Klebebandes eine Trennwirkung zwischen den einzelnen Klebebandlagen zu bewirken (in der Figur 1d ist diese Abdeckung (A) ebenfalls dargestellt). Die Abdeckung (A) besteht insbesondere aus einem silikonisierten Material, vorzugsweise aus silikonisiertem Papier.
Bezüglich des Klebebandes (K) ist weiterhin das einführend beschriebene kartesische (orthogonale) Koordinatenkreuz dargestellt, dessen x-Achse (Abszisse) in Längsrichtung des Klebebandes verläuft, wobei die Achse zur Rollenwicklung (W) zeigt (x-Richtung), dessen y-Achse (Ordinate) von der linken (l_{K}) Klebebandkante zur rechten (r_{K}) Klebebandkante zeigt (y-Richtung), und dessen z-Achse (Applikate) von der Oberseite (O_{K}) zur Unterseite (U_{K}) des Klebebandes (K) zeigt (z-Richtung).
Das Klebeband K besitzt eine linke Kante (l_{K}) und eine rechte Kante (r_{K}), die Bezeichnungen für die Kanten ergeben sich, wenn man auf die Oberseite (O_{K}) des Klebebandes (K) schaut, und zwar in Richtung der Rollenwicklung (W).
Da die Dimensionen des Klebebandes grundsätzlich (aber nicht zwingend) durch die Dimensionen des Hauptträgers bestimmt werden, entsprechen sich die linken und rechten Kanten (l_{K}, r_{K}) des Klebebandes (K) und des Hauptträgers (H) in der Regel. Dreht man das Klebeband nun um 180 ° [Drehung (D)], so ergibt sich die Sicht in Figur 1b: Figur 1b zeigt die Sicht auf die Unterseite (U_{K}) des Klebebandes (K), so dass das Trennsystem (S) nun sichtbar (oberhalb der Hauptträgerebene) liegt. Ebenfalls oberhalb der Hauptträgerebene liegt in dieser Ansicht die Rollenwicklung (W).
Das Koordinatensystem entspricht dann der mathematisch vertrauten Darstellung.
Aus den Definitionen der Richtungen ergibt sich weiterhin, dass die Abrollrichtung des Klebebandes der x-Richtung entspricht, wenn man die Rollenwicklung abwickelt.
Figur 1d zeigt beispielhaft anhand einer willkürlich gewählten, nicht erfindungsbeschränkend zu verstehenden Ausführungsform einen Querschnitt eines erfindungsgemäßen Klebebandes, die Blickrichtung entspricht der positiven x-Richtung. Die Bezugszeichen entsprechen den bisherigen Definitionen. In der Figur 1d ist ebenfalls die optional vorhandene Abdeckung (A) dargestellt. Die Abdeckung kann mit einem Schnitt oder einer Sollbruchstelle (P), insbesondere in Form einer Perforation, eines Anschnitts, einer Schlitzung oder ähnlichem, der bzw. die in Längsrichtung des Klebebandes, also in x-Richtung und somit parallel zu den Klebeband-Längskanten (r_{K}, l_{K}) verläuft, in zwei Abschnitte (A₁) und (A₂) geteilt sein oder für eine mögliche Teilung vorbereitet sein.
Wird das Klebeband (K) in der Anwendung manuell verarbeitet, ist es vorteilhaft, wenn das Abdeckmaterial den Schnitt oder die Perforation (P) aufweist, so dass die entstehenden Teilstücke unabhängig voneinander abgezogen werden können. Das Abdeckmaterial kann aber auch ungeschlitzt vorliegen, insbesondere wenn das Klebeband später in einem automatischen oder automatisierten Prozess verklebt wird. Für die manuelle Verklebung ist das Abdeckmaterial vorzugsweise Papier, da es dann handeinreißbar ist. Insbesondere bei einer automatischen Applikation kann das Abdeckmaterial auch aus Folie bestehen, da in diesem Fall das Klebeband mit Abdeckung maschinell geschnitten wird. Aber auch in diesem Fall wird bevorzugt eine Abdeckung aus entsprechend behandeltem, insbesondere silikonisierten, Papier eingesetzt, da Folien - insbesondere aufgrund ihres hohen Dehnungsvermögens - zu Problemen beim Abschneiden des Klebebandes führen können.

Das Trennsystem (S) kann bündig an der rechten Längskante (r_{K}) des Klebebandes (K) angeordnet sein. Für den Einsatz der Erfindung im fliegenden Rollenwechsel hat es sich aber als sehr vorteilhaft herausgestellt, wenn das Trennsystem (S) in einem Abstand (V) von dieser Längskante (r_{K}) angeordnet ist.
Es ist möglich und vom Erfindungsgegenstand mit umfasst, dass das erfindungsgemäße Klebeband - insbesondere zur Erfüllung bestimmter Funktionen wie beispielsweise einer Detektionsfunktion für eine maschinelle Prozessführung - weitere Schichten umfasst, die hier nicht dargestellt sind.
Der Aufbau des Trennsystems (S) spielt für die schematische Darstellung des Querschnittes des Klebebandes (K) an dieser Stelle keine Rolle und soll daher hier ohne Belang bleiben, so kann das Trennsystem des erfindungsgemäßen Klebebandes einen anderen Aufbau besitzen als hier dargestellt. Die Figur 1d dient später der Beschreibung einer konkreten Ausführungsform, auf die sich an dieser Stelle bei der Erläuterung des allgemeinen Aufbaus der Erfindung explizit nicht eingeschränkt werden soll, die Bezugszeichen (O_{T}, U_{T}, M_{O}, T und M_{U}) werden zu diesem späteren Zeitpunkt erläutert.

In Figur 2 sind anhand einer beispielhaften Kurvenform (regelmäßige Wellenlinie) die einzelnen Kurvenbereiche veranschaulichend dargestellt: Es bedeuten R den rechten vorspringenden Kurvenbereich; umfassend die Abfolge eines ansteigenden Kurvenabschnitts (s), eines Maximums (Eₘₐₓ) sowie eines abfallenden Kurvenabschnitts (f). Das Bezugszeichen L bezeichnet einen linken vorspringenden Kurvenbereich, umfassend die Abfolge eines abfallenden Kurvenabschnitts (f), eines Minimums (Eₘᵢₙ) sowie eines ansteigenden Kurvenabschnitts (s).
Die in Klammern angegebenen Zahlenindizes in den Figuren dienen lediglich der Unterscheidung der einzelnen Extremwerte; so bedeutet E_{min,(1)} einen ersten Extremwert in Form eines Minimums, E_{max,(2)} einen zweiten Extremwert in Form eines Maximums usw.
Im Folgenden wird in der Beschreibung auf die vorstehend definierten Richtungen und Bezeichnungen Bezug genommen; die Verwendung der Bezugszeichen im folgenden dient aber nur dem leichteren Verständnis und soll die allgemeine Beschreibung der Erfindung nicht auf konkrete Ausführungsformen einschränken, sofern dies nicht explizit angegeben ist.

Das erfindungsgemäße Klebeband (K) ist in einer ersten sehr vorteilhaften Ausführungsform, ein solches, das für den fliegenden Rollenwechsel geeignet ist, mit einer linken (l_{K}) und einer rechten (r_{K}) Begrenzungskante, umfassend zumindest einen Hauptträger (H) und eine erste Selbstklebemassenschicht (M) auf der Oberseite (O_{K}) des Klebebandes (K), wobei auf der Unterseite (U_{K}) des Klebebandes (K) zumindest ein Trennsystem (S) vorgesehen ist, das geeignet ist, eine Klebeverbindung auf (Klebefügung zu) einem Substrat zu bewirken, die derart wieder trennbar ist, dass weder auf der Unterseite (U_{K}) des Klebebandes noch auf dem Substrat im Bereich der getrennten Klebeverbindung klebende Rückstände verbleiben. Dabei ist zumindest die rechte Begrenzungskante (r_{S}) des Trennsystems (S) in Form einer sich entlang einer Basislinie (B) erstreckenden Kurve (F) mit einer Vielzahl an Maxima (Eₘₐₓ) und Minima (Eₘᵢₙ) ausgebildet, wobei die gedachte Verbindungslinie (die Steilheitsgerade) (Gₛ) zwischen einem ersten Minimum (E_{min,(1)}) und dem entlang einer Vorzugsrichtung (v) der Basislinie (X) nächstfolgenden Maximum (E_{max,(2)}) der Kurve (F) eine geringere Steilheit aufweist als die gedachte Verbindungslinie (Steilheitsgerade) (G_{f}) zwischen diesem Maximum (E_{max,(2)}) und dem darauf wieder nächstfolgenden Minimum (E_{min,(3)}). Figur 2 zeigt unter Verwendung der vorstehend genannten Bezugszeichen beispielhaft, ohne die Erfindung hierdurch unnötig beschränken zu wollen, eine regelmäßige Kurvenform der rechten Begrenzungskante (r_{S}).

Von der Erfindung umfasst werden auch solche Kurvenformen (F) als Abbildung der rechten Begrenzungskante (r_{S}), die - absolut und/oder lokal - für ein oder mehrere Maxima und/oder für ein oder mehrere Minima eine Mehrzahl an Kurvenpunkten haben, die alle gleichzeitig am weitesten außen bzw. am weitesten innen liegen.
Dies kann insbesondere dann der Fall sein, wenn nicht ein punktförmiges Maximum ausgebildet ist, sondern einen durch mehrere Punkte (Pₘₐₓ) gebildeter Maximumsbereich (Bₘₐₓ), der insbesondere eine zur Basislinie (X) parallele Strecke bildet, die durch den Maximumbereichs-Anfangspunkt (P_{max,A}) und den Maximumbereichs-Endpunkt (P_{max,E}) begrenzt ist. Diese Begrenzungspunkte sind dadurch charakterisiert, dass jeweils einer ihrer direkten Nachbar-Kurvenpunkte auf gleicher Höhe liegt, während jeweils der andere direkte Nachbar-Kurvenpunkt weiter innen (links) liegt.
Entsprechend können nicht punktförmige Minima vorliegen, sondern jeweils durch mehrere Punkte (Pₘᵢₙ) gebildete Minimumsbereiche (Bₘᵢₙ), die insbesondere zur Basislinie (X) parallele Strecken bilden, wobei die Strecken jeweils durch die Minimumbereichs-Anfangspunkt (P_{min,A}) und den Minimumbereichs-Endpunkt (P_{min,E}) begrenzt ist. Diese Begrenzungspunkte sind entsprechend dadurch charakterisiert, dass jeweils einer ihrer direkten Nachbar-Kurvenpunkte auf gleicher Höhe liegt, während jeweils der andere direkte Nachbar-Kurvenpunkt weiter außen (rechts) liegt.
Die ansteigenden Kurvenabschnitte (s) seien hier im Sinne der vorliegenden Anmeldung derart definiert, dass sie durch den am weitesten in Vorzugsrichtung liegenden, zu einem ersten Minimumsbereich (B_{min,(1)}) gehörigen End-Begrenzungspunkt (P_{min,E,(1)}) und dem am wenigsten weit in Vorzugsrichtung liegenden, zu dem in der Vorzugsrichtung folgenden Maximumbereichs (B_{max,(2)}) gehörigen Anfangs-Begrenzungspunkt (P_{max,A,(2)}) begrenzt werden; entsprechend werden die abfallenden Kurvenabschnitte von dem am weitesten in Vorzugsrichtung liegenden, zu einem Maximumsbereich (B_{max,(2)}) gehörigen End-Begrenzungspunkt (P_{max,E,(2)}) und dem am wenigsten weit in Vorzugsrichtung liegenden, zu dem in der Vorzugsrichtung folgenden Minimumbereich (B_{min,(3)}) gehörigen Anfangs-Begrenzungspunkt (P_{min,A,(3)}) begrenzt.
Der rechte vorspringende Kurvenbereich R umfasst hier somit den ansteigenden Kurvenabschnitt (s), den in Vorzugsrichtung folgenden Maximumsbereich (Bₘₐₓ) sowie den in Vorzugsrichtung folgenden abfallenden Kurvenabschnitt (f); entsprechend umfasst der linke vorspringende Kurvenbereich (L) hier einen abfallenden Bereich (f), den in Vorzugsrichtung folgenden Minimumbereichs (Bₘᵢₙ) und den in Vorzugsrichtung darauf wieder folgenden ansteigenden Kurvenabschnitt (s).

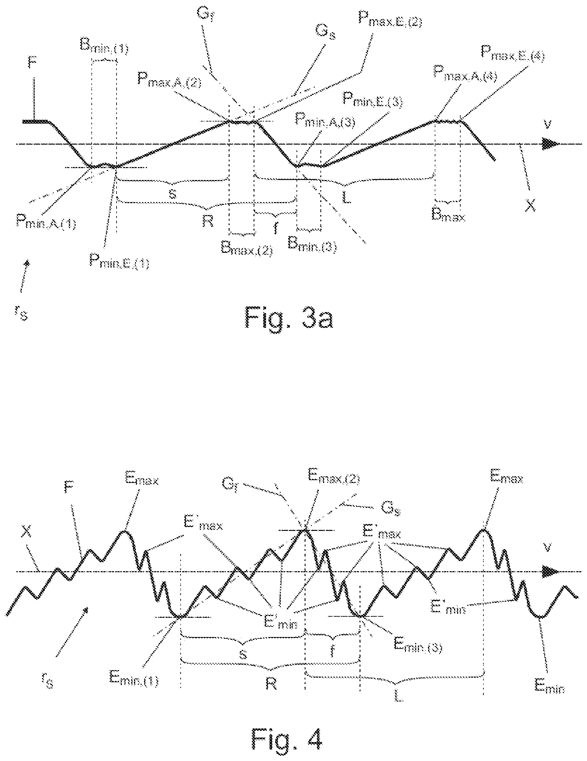

Hierfür gilt dann erfindungsgemäß, dass die gedachte Verbindungslinie (Steilheitsgerade) (Gₛ) zwischen dem am weitesten in Vorzugsrichtung (v) liegenden, zu einem ersten Minimumsbereich (B_{min,(1)}) gehörigen End-Begrenzungspunkt (P_{min,E,(1)}) und dem am wenigsten weit in Vorzugsrichtung liegenden, zu dem in der Vorzugsrichtung der Basislinie (X) folgenden Maximumbereichs (B_{max,(2)}) gehörigen Anfangs-Begrenzungspunkt (P_{max,A,(2)}) eine geringere Steilheit aufweist als die gedachte Verbindungslinie (Steilheitsgerade) (G_{f}) zwischen dem am weitesten in Vorzugsrichtung liegenden, zu diesem Maximumsbereich (B_{max,(2)}) gehörigen End-Begrenzungspunkt (P_{max,E,(2)}) und dem am wenigsten weit in Vorzugsrichtung liegenden, zu dem in der Vorzugsrichtung wiederum folgenden Minimumbereich (B_{min,(3)}) gehörigen Anfangs-Begrenzungspunkt (P_{min,A,(3)}).
Die gedachten Verbindungslinien entsprechen mathematisch jeweils einer Geraden, die konstant die über sämtliche (tatsächlichen) Kurvenpunkte im jeweiligen Kurvenabschnitt gemittelte Steigung (arithmetisches Mittel der ersten Ableitungen der Kurve in jedem Punkt im jeweiligen Kurvenabschnitt) aufweist; wobei die Steilheit wieder dem Betrag der Steigung entspricht.
Eine derartige Ausführungsform ist beispielhaft in Figur 3 dargestellt, ohne durch die Wahl der Darstellung diese Ausführungsvariante unnötig beschränken zu wollen.

Ein Maximum- und/oder Minimumbereich kann auch dadurch gegeben sein, dass im wesentlichen zur x-Achse parallele Bereiche ausgebildet sind, sich in diesen Bereichen aber wiederum lokale Minima oder Maxima oder kleine Minimum- oder Maximumbereiche vorhanden sind; die insbesondere zum Trennsysteminneren ausgerichtet sind. Beispiele für solche Bereiche sind in Figur 3a anhand von 4 Extremwerten 1 bis 4 angedeutet.

Unter den Gegenstand der Erfindung fallen auch solche Klebebänder, deren Trennsystem (S) eine rechte Begrenzungskante (r_{S}) aufweist, die durch eine - insbesondere periodische - Kurvenform (F) abgebildet wird, bei der eine Abfolge einer Mehrzahl an Maxima (Eₘₐₓ) und Minima (Eₘᵢₙ) auftritt, wobei die gedachte Verbindungslinie (Steilheitsgerade) (Gₛ) zwischen einem jeweiligen Minimum (E_{min,(1)}) der Abfolge, insbesondere der Periode, und dem entlang einer Vorzugsrichtung (v) der Basislinie (X) folgenden Maximum (E_{max,(2)}) der Abfolge, insbesondere der Periode, eine geringere Steilheit aufweist als die gedachte Verbindungslinie (Steilheitsgerade) (G_{f}) zwischen diesem Maximum (E_{max,(2)}) und einem darauf wieder folgenden Minimum (E_{min,(3)}), selbst wenn zwischen diesen Minima und Maxima weitere (lokale) Minima (E'ₘᵢₙ) und Maxima (E'ₘₐₓ) auftreten, so dass die Minima (Eₘᵢₙ) und die Maxima (Eₘₐₓ) nicht direkt aufeinander folgend sind und selbst wenn bezüglich der Bereiche zwischen den lokalen Maxima (E'ₘₐₓ) und/oder den lokalen Minima (E'ₘᵢₙ) die Steilheiten nicht näher festgelegt sind.
Es gilt aber trotzdem, dass der Kurvenanstieg (s) in Richtung auf ein ("absolutes") Maximums (Eₘₐₓ) aber über einen wesentlichen Kurvenbereich flacher verläuft als der Kurvenabfall nach diesem Maximum (Eₘₐₓ), und insbesondere, dass derartige "flache" Kurvenanstiege und "steile" Kurvenabfälle wiederkehrend einander folgen.
Eine derartige Ausführungsform zeigt Figur 4, ohne wiederum durch die Wahl der Darstellung diese Ausführungsvariante unnötig beschränken zu wollen. In die Figur 4 sind ebenfalls die Kurvenbereiche (R) und (L) und die Kurvenabschnitte (s) und (f) eingezeichnet; wie sie sich hierfür ergeben.

Selbstverständlich umfasst die Erfindung auch solche Ausführungsformen, bei denen die rechte Begrenzungskante (r_{S}) des Trennsystems durch eine Kurve abgebildet werden kann, in denen die unterschiedlichen Maxima (Eₘₐₓ) und/oder Maximumsbereiche (Bₘₐₓ) und/oder Minima (Eₘᵢₙ) und/oder Minimumsbereiche (Bₘᵢₙ) gemischt auftreten, so dass zwei oder mehrere verschiedene Ausbildungen dieser Punkte bzw. Punktbereiche auftreten. Die Kurvenbereiche (R) und (L) und die Kurvenabschnitte (s) und (f) werden dann in den Maxima (Eₘₐₓ) bzw. Minima (Eₘᵢₙ) bzw. den entsprechenden Maximums-(Bₘₐₓ) und Minimumsbereichen (Bₘᵢₙ) derart begrenzt, wie dies bei den jeweiligen Ausführungsformen (siehe vorstehende Ausführungen zu den Figuren 2 bis 4) beschrieben wurde. Die gedachten Verbindungslinien (Gₛ, G_{f}) werden entsprechend durch die bei den jeweiligen Ausführungsformen definierten Aufhängepunkte in den Maxima, Maximumsbereichen, Minima bzw. Minimumsbereichen definiert.

Für das erfindungsgemäße Klebeband gilt weiterhin folgendes:
Es ist vorteilhaft, wenn die Basislinie (X) parallel zur Längsrichtung (x-Richtung) des Klebebandes (K) verläuft. Sehr bevorzugt ist das Trennsystem (S) also derart auf dem Klebeband angeordnet, dass die Basislinie (X) sich parallel zur x-Achse des Koordinatensystems erstreckt und die Vorzugsrichtung (v) der x-Richtung entspricht, also in Richtung der Rollenwicklung (W) zeigt.

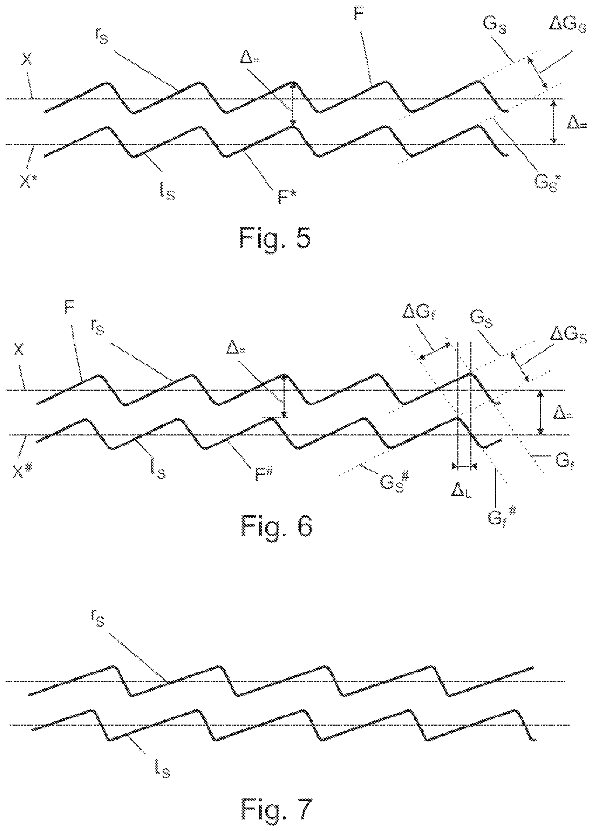

Eine sehr vorteilhafte Ausführungsform des Klebebandes (K) ist derart gestaltet, dass die der rechten Begrenzungskante (r_{S}) gegenüberliegende linke Begrenzungskante (l_{S}) des Trennsystems (S) in Form einer Kurve (F*) ausgebildet ist, die sich durch Parallelverschiebung der die rechte Begrenzungskante (r_{S}) des Trennsystems (S) bildenden Kurve (F) entlang einer auf die Basislinie (X) senkrecht stehenden Linie ergibt. Beispielhaft ist diese Ausführungsform in Figur 5 dargestellt, wobei die Parallelverschiebung hier um einen Betrag der Größe Δ₌ erfolgt ist.
Bezüglich der Ausführungsform, in der die Basislinie (X) parallel zur Längsrichtung (x-Richtung) des Klebebandes erfolgt, bedeutet dies eine Verschiebung in Richtung der y-Achse, und zwar bevorzugt in negative Richtung (nach links).

Eine Weiterentwicklung der Erfindung zeichnet sich dadurch aus, dass die Form der linke Begrenzungskante (l_{S}) des Trennsystems (S) in Form einer Kurve (F^{#}) ausgebildet ist, die dadurch zustande kommt, dass zusätzlich zu der Parallelverschiebung der die rechte Begrenzungskante (r_{S}) bildende Kurve F eine Verschiebung dieser Kurve in Richtung der Basislinie (X) erfolgt. Ein Beispiel dieser Ausführungsform ist in Figur 6 dargestellt; die die linke Begrenzungskante (l_{S}) abbildende Kurve F^{#} ergibt sich hier durch Parallelverschiebung der Kurve F sowohl entlang einer Senkrechten zur Basislinie (X) um den Betrag Δ₌ als auch um Längsverschiebung der Kurve F entlang einer Parallelen zur Basislinie (X) um den Betrag Δ_{L}.
Bezüglich der Ausführungsform, in der die Basislinie (X) parallel zur Längsrichtung (x-Richtung) des Klebebandes erfolgt, bedeutet diese Variante der Erfindung eine Verschiebung sowohl auf der y-Achse (insbesondere in negative Richtung) als auch eine Verschiebung in Richtung der x-Achse.

Figur 7 zeigt beispielhaft ein Trennsystem (S) mit einer rechten (r_{S}) und einer linken ((l_{S}) Begrenzungskante, bei dem das Steilheitsverhältnis zwischen ansteigendem und abfallendem Kurvenabschnitt stärker ausgeprägt ist als in Figur 6.

Der Hauptträger kann in bevorzugter Weise ein Papierträger sein. Wichtig an diesem Papier sind die physikalischen Eigenschaften, vornehmlich die Reißkraft. Diese soll höher als die Bahnspannungen in der Druckmaschine oder anderen Bearbeitungsmaschinen liegen. Insbesondere bei Maschinen mit geringeren Bahnspannungen kann das Papier auch dünner gewählt werden. Dieses hat Vorteile für den Verarbeitungsprozess, da dünnere Materialien den Maschinendurchlauf weniger stören.

### Beschaffenheit des Trennsvstems auf der Unterseite des Klebebandes

Das Trennsystem (S) auf der Unterseite des Klebebandes ist erfindungsgemäß dafür geeignet, eine Klebeverbindung zwischen dem Hauptträger und einem Substrat zu bewirken. Das Trennsystem ist derart gestaltet, dass es erlaubt, die durch das System bewirkte Klebeverbindung wieder zu trennen, ohne dass auf der Unterseite des Klebebandes noch auf dem Substrat im Bereich der getrennten Klebeverbindung klebende Rückstände verbleiben. Die Trennung erfolgt dabei flächig, also in z-Richtung (leichte Abweichungen von der z-Richtung aufgrund von prozessbedingten Ungenauigkeiten oder Dickenschwankungen und dergleichen seien mit umfasst und sollen der Bezeichnung "Trennung in z-Richtung" nicht entgegenstehen). Im Flächenbereich der gelösten Klebeverbindung sollen also weder auf Seiten des Klebebandes noch auf Seiten des Substrats klebende oder klebrige Flächen verbleiben. Die Trennung der Klebefügung, ohne dass auf der Unterseite des Klebebandes noch auf dem Substrat im Bereich der getrennten Klebeverbindung klebende Rückstände verbleiben, umfasst dabei insbesondere einen (flächigen) Spaltvorgang innerhalb des Trennsystems (insbesondere das flächige Spalten einer einlagigen oder einstückigen Schicht des Trennsystems), ein Delaminieren zweier aufeinander laminierter Schichten des Systems oder das Wiederablösen einer der Schichten des Trennsystems von dem Substrat, auf welchem das Trennsystem verklebt war, und/oder das Wiederablösen einer der Schichten des Trennsystems von einer anderen Schicht des erfindungsgemäßen Klebebandes.

In einer Ausgestaltung des Trennsystems, die veranschaulichend in Figur 1d dargestellt ist, wird dieses dadurch bewirkt, dass das Trennsystem (S) selbst in Form eines doppelseitigen Klebebandes ausgestaltet ist, welches seinerseits einen Träger (T) - auch als "Systemträger" oder "spaltfähiger Träger" bezeichnet - aufweist, der auf seiner Oberseite (O_{T}) und auf seiner Unterseite (U_{T}) jeweils mit einer Schicht einer Klebemasse (M_{O}, M_{U}) versehen ist.
Der Systemträger ist in einer ersten Ausgestaltungsform ein einstückiger (einlagiger) Papierträger, der sich bei Einwirkung entsprechender Kräfte flächig spalten lässt. Die Klebeverbindung mittels dieses Trennsystems lässt sich dann wieder trennen, indem der Systemträger flächig in z-Richtung spaltet; insbesondere im wesentlichen bezüglich der Systemträgerfläche mittig spaltet, die jeweiligen Klebemassenschichten sind durch die nach der Spaltung verbleibenden flächigen Reste des Systemträgers nichtklebend abgedeckt.
Der Systemträger kann auch mehrlagig aufgebaut sein, wobei eine der Trägerschichten spaltfähig ist.
Als "spaltfähig" werden im Rahmen dieser Schrift entsprechend solche Träger bezeichnet, die parallel zu ihrer Flächenausdehnung spaltbar sind, und insbesondere solche Träger, die bezogen auf die Anforderungen in einem Splice-Verfahren auch tatsächlich spalten. "Im wesentlichen mittige Spaltung" bedeutet im Sinne dieser Erfindung, dass bei der Spaltung etwa gleich dicke, flächige Trägerreste als Spaltprodukte entstehen; im Gegensatz zu einer im wesentlichen nicht mittigen Spaltung, bei denen deutlich unterschiedlich dicke (flächige) Trägerreste als Spaltprodukte entstehen. Insbesondere soll eine im wesentlichen mittige Spaltung des einstückigen Trägers dadurch gekennzeichnet sein, dass die Spaltprodukte die entsprechenden Klebemassen zuverlässig nichtklebend abdecken. Bei einer unsymmetrischen Spaltung wäre dies auf Seiten des zu dünnen flächigen Trägerrestes gegebenenfalls nicht gewährleistet).

Als spaltfähiger Träger kommen alle spaltfähigen flächigen Trägermaterialien in Frage, insbesondere leicht spaltende Papiere, Kraftpapiere, Papierverbundsysteme (beispielsweise Duplexpapiere und geleimte Papiersysteme), Folienverbundsysteme (beispielsweise geleimte Foliensysteme), polymere Verbundsysteme (beispielsweise coextrudierte polymere Verbundsysteme) und polymere Vliesstoffe.

Vorteilhaft wird ein spaltfähiger Träger eingesetzt, welcher eine deutlich geringere Spaltfestigkeit als ein Träger aufweist, welcher Zugkräfte aufnehmen muss. Insbesondere bevorzugt wird ein spaltfähiger Träger verwendet, der einen deutlich geringen Weiterreißwiderstand aufweist als ein Träger oder eine Trägerschicht, die die eigentlichen Zugkräfte in der Hauptebene des Klebebands (also als der Hauptträger H) aufnimmt, um die beiden Materialbahnen miteinander zu verbinden. Somit wird der Systemträger aufgespalten, bevor der Hauptträger zerstört wird. Das oder die spaltfähigen Systeme basieren bevorzugt auf Papier. Hierfür kommen beispielsweise insbesondere folgende Papiere oder Papierverbundsysteme in Frage:
- Geleimte hochverdichtete Papiere
- Leicht spaltbare Papiersysteme, z. B. nicht nassfeste Papiere
- Kraftpapiere (beispielsweise beidseitig glatte Kraftpapiere - insbesondere geeignet gezeigt hat sich ein Kraftpapier von 55 µm Dicke und einem Flächengewicht von 65 g/m²)
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Spaltfähige Systeme, bei welchen die Spaltkräfte über die Größe der Verklebungspunkte bestimmt werden; solche spaltfähigen Systeme werden beispielsweise in der DE 198 41 609 A1 beschrieben.
Die obere Klebemasse und die untere Klebemasse des Trennsystems sollten eine hohe Klebkraft aufweisen. Insbesondere ist es vorteilhaft, wenn die Klebkräfte dieser Selbstklebemassen auf den jeweiligen Oberflächen (Träger und Substrat) größer ausfallen als die für ein Spalten des spaltfähigen Trägers erforderliche Kraft. Vorteilhafte spaltfähige Träger weisen bevorzugt Spaltfestigkeiten von 15 bis 70 cN/cm, insbesondere von 22 bis 60 cN/cm, ganz besonders von 25 bis 50 cN/cm auf. Zur Spaltfestigkeit und ihrer Messung wird auf die DE 199 02 179 A1 verwiesen.

Eine Variante dieser Ausführungsform des Klebebandes ist dadurch gegeben, dass der Träger (T) des Trennsystems nicht einlagig und flächig spaltbar, sondern in Form zweier flächig (in z-Richtung) voneinander lösbarer (delaminierbarer) Schichten ausgestaltet ist. Dies können insbesondere Papier-Papier- oder Folien-Folien-Laminate oder auch ein Laminat von Papier mit Folie sein. Hierfür kommen beispielsweise insbesondere folgende Laminat- oder Verbundsysteme auf Papier- und/oder Folienbasis in Frage:
- Duplexpapiere
   (definiert zusammenlaminierte Papiere, der Spaltvorgang verläuft extrem homogen; es entstehen keine Spannungsspitzen, z. B. durch inhomogene Verdichtung. Diese Papiere werden zur Herstellung von Tapeten und Filtern eingesetzt.)
- Spaltfähige Systeme, bei welchen die Spaltkräfte über die Größe der Verklebungspunkte bestimmt werden; solche Systeme werden beispielsweise in der DE 198 41 609 A1 beschrieben.
Insbesondere für repulpierbare Klebebänder ist ein Laminat zweier Papiere vorteilhaft. Beispiele für derartige Papierlaminate sind
- definiert zusammengeleimte hochverdichtete Papiere (insbesondere Papiere mit einer hohen Spaltfestigkeit). Die Leimung kann beispielsweise mit Stärke, stärkehaltigen Derivaten, Tapetenkleister auf Basis von Methylcellulose (tesa® Kleister, tesa AG, Hamburg; Methylan®, Henkel KgaA, Düsseldorf) oder auch auf Basis von Polyvinylalkoholderivaten erfolgen. Beschrieben werden solche Laminat-Systeme beispielsweise in der EP 0 757 657 A1.
Das Laminat kann auch ein solches zweier Polymerschichten, einer Polymerschicht mit Papier oder einer Polymerschicht mit Folie ausgestaltet sein, wobei das Polymer insbesondere ein solches ist, das sich durch Drucktechnik, wie etwa Tiefdruck, Siebdruck oder dergleichen, aufbringen lässt. Für das Polymer kommen hier insbesondere aushärtende Polymermassen in Frage, aber auch lösemittelhaltige Massen, denen nach der Aufbringung das Lösemittel entzogen wird, wobei die Schicht entsteht, weiterhin auch Polymermassen, die im erwärmten Zustand erweichen, also hinreichende Viskosität aufweisen, um aufgebracht werden zu können, bei Anwendungstemperatur aber als hinreichend stabile Schicht vorliegen.

Die Klebeverbindung mittels eines solchen Trennsystems lässt sich dann wieder trennen, indem sich die beiden Schichten des Systemträgers flächig voneinander lösen (delaminieren); die jeweiligen Klebemassenschichten sind durch die nach der Trennung verbleibenden flächigen Schichten des Systemträgers nichtklebend abgedeckt.
Umfasst werden von dieser Ausführungsvariante aber auch alle anderen Klebebänder, bei denen der Träger (T) aus anderen Materialien zweischichtig trennbar aufgebaut ist, wobei die Trägermaterialien insbesondere auf die jeweilige Anwendung abgestimmt sind. Der Kerngedanke eines derartigen Trennsystems besteht darin, dass der Spaltvorgang des spaltbaren Systems zwischen zwei voneinander trennbaren Schichten stattfindet und nicht innerhalb einer Schicht. Somit werden beispielsweise aus einem Papierträger keine Fasern herausgerissen und die notwendige Kraft zum Trennen der Schichten kann exakt definiert werden. Ebenso tritt durch eine längere Lagerung des Klebebands keine wesentliche Änderung der zum Trennen der Schichten notwendigen Kräfte auf. Die Art der Verbindung der beiden Schichten kann in beliebiger Weise oder bevorzugt wie im Folgenden beschrieben ausgeführt sein. Bevorzugt wird auch hier ein Laminat-Systemträger verwendet, der einen deutlich geringeren "Weiterreißwiderstand" (bezogen auf den Delaminierungsvorgang) aufweist als ein Träger oder eine Trägerschicht, die die eigentlichen Zugkräfte in der Hauptebene des Klebebands (also als der Hauptträger) aufnimmt, um die beiden Materialbahnen miteinander zu verbinden. Somit kann das Trennsystem delaminieren, bevor der Hauptträger oder eine der Systemträgerschichten zerstört wird. Das Trennsystem besteht hierbei also aus zumindest zwei Schichten, die sich unter einer definierten Krafteinwirkung, die beim fliegenden Rollenwechsel überschritten wird, delaminieren, also voneinander trennen. Beispiele hierfür sind koextrudierte Folien.
Die Trennfestigkeit des Laminats bzw. der Zwei-Trägerschichten-Systeme weist dabei insbesondere die Zahlenwerte auf, wie sie oben für die Spaltfestigkeit des flächig spaltenden, einstückigen Trägers angegeben sind.

Der Vorteil eines wie vorstehend beschrieben Trennsystems besteht darin, dass die notwendige Kraft zum Trennen des Trennsystems stets konstant bleibt, so dass ein fliegender Rollenwechsel unter kontrollierten Bedingungen ausführbar ist und eine Fehlfunktion des Klebebands vermieden wird.

Die beiden trennbaren Schichten können beispielsweise aufgrund von Adhäsionskräften aneinander haften. Hierbei können die beiden Schichten aus an sich beliebigen Materialien bestehen, wobei aufgrund der jeweiligen Materialeigenschaften unterschiedlich starke Adhäsionskräfte zwischen den Schichten wirken. Es ist dem Fachmann möglich, geeignete Materialien auszuwählen, um zwischen den Schichten eine definierte Adhäsionskraft zu erhalten. Wird das Klebeband in Normalrichtung, d. h. im Wesentlichen senkrecht zur Hauptebene des Klebebands, mit einer Kraft beaufschlagt trennen sich die beiden Schichten voneinander, sobald diese Kraft größer ist als die Adhäsionskraft. Nach dem Spalten bedeckt jeweils eine der Schichten die Selbstklebemassen, so dass diese in nicht klebender Weise abgedeckt sind. Dadurch ist gewährleistet, dass die beiden Schichten mit definierter und zeitlich konstanter Kraft voneinander getrennt werden können. Da die beiden Schichten aufgrund von Adhäsionskräften aneinander haften kann auf eine zusätzliche Klebeschicht verzichtet und somit die Gesamtdicke des Klebebands verringert werden.

In einer weiteren Ausgestaltung des Trennsystems weist dieses auf seiner Ober- oder auf seiner Unterseite eine Klebemasse (wiederlösbare Systemklebemasse) auf, die zur Verklebung auf dem Substrat dient. In der einfachsten Form dieser Ausgestaltung stellt die wiederlösbare Klebemasssenschicht selbst (allein) das System dar. Ein solches System kann aber auch mehrschichtig aufgebaut sein, etwa mit einem Träger und einer weiteren Klebemassenschicht auf der anderen Seite des Trägers (die ebenfalls eine wiederlösbare (Selbst-)Klebemasse sein kann).
In dieser Ausführungsform ist die wiederlösbare Systemklebemassenschicht derart, dass sie nach der Verklebung aushärtet oder in anderer Weise ihre Klebeeigenschaften verliert, so dass zwar die Klebefügung zunächst erhalten bleibt, nach der Wiederablösung vom Untergrund die Klebemassenschicht aber nicht mehr klebrig vorliegt (als Klebemassen in diesem Sinne werden also alle Massen, insbesondere Polymermassen bezeichnet, die zunächst eine Klebewirkung bewirken, nachdem aber in nichtklebenden und/oder nichtklebriger Form vorliegen können). Die wiederlösbare Systemklebemasse kann dabei auf der Oberseite des Trennsystems vorgesehen sein, so dass die Lösung der Klebeverbindung insbesondere auf Seiten des Klebeband-Körpers (insbesondere also zu dessen Hauptträger) geschieht, die wiederlösbare Selbstklebemasse kann aber auch auf der Unterseite des Trennsystems vorgesehen sein, so dass die Lösung der Klebeverbindung auf Seiten des Substrats geschieht. Im ersten Fall verbleibt das System ohne offenliegende Klebeflächen auf dem Substrat, im zweiten Fall auf dem Klebeband (besteht das Trennsystem lediglich aus der wiederlösbaren Systemklebemasse oder weist das Trennsystem sowohl oben als auch unten eine wiederlösbare Systemklebemasse auf, so hängt der Ort der Trennung davon ab, ob die Klebkraft zum Hauptträger oder zum Substrat stärker ist). Nach dem Löseprozess liegen beide Oberflächen im Bereich der gelösten Verklebungsfläche in nicht klebriger Form vor.
Im Falle eines mehrschichtigen Systems, welches neben der Systemklebemasse eine weitere - insbesondere nichtwiederlösbare - Klebemassenschicht aufweist, vermag diese weitere Klebemassenschicht eine dauerhafte Klebeverbindung zum Substrat zu vermitteln, wenn die Ablösung der Systemklebemasse auf der Klebebandseite geschieht, beziehungsweise zum Klebeband, wenn die Ablösung der Systemklebemassenschicht auf der Substratseite geschieht.
Für eine derartige Systemklebemasse sind beispielsweise aushärtende Klebemassen, aushärtende Lacke, Polymere (insbesondere härtende Polymere) und dergleichen geeignet, weiterhin insbesondere auch hitzeaktivierbare Klebemassen, die bei Raumtemperatur (Anwendungstemperatur) nichtklebrig sind und mit denen der Verklebeprozess in der Wärme realisiert wird.

Die wiederlösbare Klebemasse des Systems kann dabei vollflächig auf den Systemträger, die Hauptträger (H) bzw. den jeweiligen Untergrund aufgebracht sein, erfindungsgemäß kann diese Klebemasse aber auch nur teilflächig aufgebracht sein. Vorteilhaft kann die wiederlösbare Klebemasse in Drucktechnik aufgebracht ist, insbesondere durch Siebdruck oder durch Tiefdruck.

Eine weitere Ausführungsform des erfindungsgemäßen Klebebandes besteht darin, dass eine wiederlösbare Klebemasse, wie sie vorstehend beschrieben ist, in Form des Trennsystems auf die Unterseite des Hauptträgers aufgebracht ist, insbesondere durch eine der vorgenannten Techniken.

Bei einer hervorragenden Variante des Klebebandes liegen zwei Schichten der gleichen oder unterschiedlicher wiederlösbarer Klebemassen vor, die unter den genannten Anforderungsbedingungen delaminierbar sind. Das Trennsystem kann insbesondere in Form eines Gebildes ausgestaltet sein, dass nur diese Klebemassenschichten allein umfasst; Trennsysteme mit solchen Massenschichten-Laminaten können aber auch weitere Schichten umfassen.

Erfindungsgemäß können auch mehrere Trennsysteme über die Breite des Klebebandes auf dessen Unterseite verteilt liegen.
Dies hat zum einen den Vorteil, dass die Verklebungsfläche des Klebebandes erhöht wird, zum anderen wird die Spaltfestigkeit des Verbundes erhöht. Hier kann auch das Aufbringen von unterschiedlichen Streifengeometrien sinnvoll sein.
Bei mehreren Trennsystemen auf dem Klebeband können diese aus dem gleichen Material bestehen und somit gleiche Spaltkräfte aufweisen, es kann aber auch von Vorteil sein, die Trennsysteme aus unterschiedlichem Material vorzusehen, so dass diese unterschiedliche Spaltkräfte besitzen.
Die zweiten und gegebenenfalls weiteren Trennsysteme auf der Klebeband-Unterseite können wie das erste Trennsystem bevorzugt erfindungsgemäß geformt sein, aber auch andere Geometrien aufweisen, im einfachsten Fall einen geradlinigen Streifen, wie er aus dem Stand der Technik bekannt ist.

Insbesondere für den Einsatz in der papierverarbeitenden Industrie ist es von Vorteil, wenn einige, besser die meisten, noch besser alle im Prozess zum Einsatz kommenden Bestandteile des erfindungsgemäßen Klebebandes repulpierbar, also insbesondere wasserlöslich oder dispergierbar sind.

Als Klebemassen, insbesondere Selbstklebemassen, im Sinne der Klebemassenschichten (M, M_{O}, M_{U}) des erfindungsgemäßen Klebebandes (K) können - bezüglich der einzelnen Schichten unabhängig voneinander wählbar - hervorragend unter anderem Acrylate (wasserlösliche und/oder nichtwasserlösliche), Naturkautschukmasssen, Synthesekautschukmassen, Mischungen der vorgenannten Massen, Massen auf Basis von Copolymneren und/oder Blockcopolymeren, insbesondere auf Basis von Acrylaten und/oder Naturkautschuken und/oder Synthesekautschuken und/oder Styrol eingesetzt werden. Insbesondere können vorteilhaft Dispersionen, heißschmelzende (auch heißschmelzverarbeitbare) Klebemassen und/oder Klebemassen auf Lösungsmittelbasis eingesetzt werden. Die Auswahl der Klebemassen erfolgt dabei in Hinblick auf den jeweils bestimmten Einsatzbereich des erfindungsgemäßen Klebebandes (insbesondere fliegender Rollenwechsel, statischer Rollenwechsel, Rollenendverklebung usw.).

Insbesondere sowohl die Klebmasse (M_{O}) zum Systemträger (T) als auch die Klebmasse (M_{U}), die später auf das zu spleißende Substrat gebracht wird, können Selbstklebmassen sein, können aber auch aushärtende Klebmassen sein.
Aushärtende Klebmassen zum Träger haben den Vorteil, dass sie in geringeren Schichtdicken aufgebracht werden können und somit die Dicke des Gesamtsystems reduzieren. Aushärtende Klebmassen im Sinne der Klebemasse (M_{U}) auf der Seite, die auf das zu spleißende Substrat gebracht wird, bieten den Vorteil, dass besonders schwierige Verklebungsuntergründe sicher verklebt werden. Derartige Klebmassen werden z.B. durch Wasser oder andere Lösungsmittel oder Wärme aktiviert. Zwar wird beim Einsatz dieser Klebmassen mehr Zeit benötigt, die Klebmasse muss in der Regel aktiviert werden, das Klebeband appliziert und danach die Klebmasse aushärten, allerdings lässt sich das in den heutigen Produktionszyklen üblicherweise gut realisieren, da häufig mit zentraler Splicevorbereitung gearbeitet wird. Dabei werden die zu spleißenden Rollen in der Regel 6 bis 8 Stunden im Voraus vorbereitet.

Insbesondere vorteilhaft ist es, besonders scherfeste (Selbst-)Klebemassen einzusetzen; auch die weiteren die Klebeeigenschaften bestimmenden Größen wie Tack (Anfassklebrigkeit), Kohäsion, Viskosität, Vernetzungsgrad etc. sollten erfindungsgemäß auf den jeweiligen Verwendungszweck optimiert werden, was nach den dem Fachmann geläufigen Verfahren geschehen kann. Es sei darauf verwiesen, dass prinzipiell alle Basistypen von Haftklebemassen, welche die erfinderischen Kriterien erfüllen, eingesetzt werden können.

In einer weiteren vorteilhaften Ausgestaltung des erfindungsgemäßen Klebebandes ist das Klebeband zusätzlich mit einer detektierbaren Schicht versehen und/oder ist zumindest eine der bereits beschriebenen Schichten mit einem detektierbaren Merkmal versehen. Hierdurch kann eine Detektion des Klebebandes durch geeignete Detektierapparaturen während des (Splice-)Prozesses bewirkt werden. Insbesondere kann hierdurch eine automatisierte Steuerung des Prozesses erzielt werden. Bei geeigneter Wahl des detektierbaren Merkmals können durch dieses auch zusätzliche Informationen (über eine Ja/Nein-Information hinaus) übertragen werden.
Die Detektion der Schicht erfolgt vorzugsweise optisch und/oder elektromagnetisch. Beispielsweise kann eine der Schichten mit einem optisch erkennbaren Muster versehen sein, das mit Hilfe geeigneter Sensoren beim Durchlauf durch die Maschine feststellbar ist. In gleicher Weise kann eine der Schichten ein elektromagnetisch detektierbares Merkmal enthalten, beispielsweise eine Metallisierung, die mit Hilfe eines elektromagnetischen Sensors feststellbar ist. Aufgrund der Detektierbarkeit zumindest einer der Schichten wird beispielsweise beim Beschleunigen einer Papierrolle, die mit einem derartigen Klebeband versehen ist, das Klebeband detektiert und somit der Splice- oder Verbindungsvorgang mit dem Bahnende der alten Rolle zum richtigen Zeitpunkt ausgelöst. Des Weiteren kann bei der Weiterverarbeitung der Papierbahn in einer sogenannten Makulaturweiche das Klebeband detektiert werden, um diesen Abschnitt mit der Spliceverbindung auszusondern. Somit übernimmt das Klebeband die Funktion bisher zusätzlich aufgebrachter Etiketten oder Markierungen, die im Stand der Technik manuell an einer Rolle eines bahnförmigen Materials angebracht wurden, was häufig zu Fehlfunktionen führte, da das Etikett an einer falschen Stelle angebracht wurde. Somit ist gewährleistet, dass aufgrund der Detektierbarkeit des Klebebands die genaue Position der Verklebung automatisch feststellbar ist und das Abschneiden bzw. Aussondern dieser Verbindung stets an der richtigen Stelle selbsttätig automatisch erfolgen kann. Mit diesem detektierbaren Klebeband ist es auch möglich, aufgrund der Rotationsgeschwindigkeit der Rolle Informationen über den Prozessablauf zu erhalten, da aus der Bewegung des Klebebands beispielsweise unmittelbar auf die Transportgeschwindigkeit der Bahn geschlossen werden kann.
In einfacher Weise ist die detektierbare Schicht eine Metallfolie, insbesondere Aluminium. Die detektierbare Schicht, beispielsweise eine Aluminiumfolie, weist beispielsweise eine Dicke von 6 bis 12 µm auf. Ebenso ist es möglich, dass die detektierbare Schicht eine Papierfolie ist, die mit einer Metallisierung bzw. metallischen Anteilen versehen ist. Ist eine der Schichten eine Metallfolie, wird die andere Schicht bevorzugt in Form einer Acrylatdispersion, Polymethylmethacrylat (PMMA), Latex, Polyvinylacrylat (PVA), Polyvibylchlorid (PVC) bzw. als Copolymer dieser Stoffe ausgeführt. Mit diesen Stoffkombinationen können die vorstehend genannten Weiterreißwiderstände in gewünschter Weise definiert eingestellt werden. Dabei treten auch bei längerer Lagerung des Klebebands keine Veränderungen dieser Festigkeitswerte auf, da die Adhäsionskräfte zwischen diesen Materialien unverändert bleiben. Es versteht sich, dass sowohl die Metallfolie als auch die weitere Schicht jeweils an ihren Außenseiten mit einer Selbstklebemasse versehen sind. Diese Selbstklebemasse ist vorzugsweise eine wasserlösliche oder wasserunlösliche Acrylat-Selbstklebemasse. In gleicher Weise können beispielsweise Natur- und Synthesekautschukmassen als auch Dispersionen der vorstehend beschriebenen Verbindungen verwendet werden.
Weiterhin kann es vorteilhaft sein, dass die detektierbare Schicht ihrerseits auf einen Träger aufgebracht ist. Dabei ist die detektierbare Schicht auf einer Seite des Trägers angeordnet und die zugehörige Selbstklebemasse auf der anderen Seite des Trägers. Der Träger kann aus Papier oder einer Folie bestehen. Der Träger kann unter anderem ein glattes, weißes, gebleichtes Kraftpapier sein.

### Beschaffenheit und Dimensionen des Klebebandes

Alle (Dimensions-)Angaben im folgenden gelten unabhängig von der tatsächlichen Kurvenform der Kurve F; auch dann, wenn sich zur Veranschaulichung der Werte auf eine der Figuren und die darin gezeigte Ausführungsform bezogen wird. Die angegebenen Werte gelten dann insbesondere vorteilhaft für die dargestellte Ausführungsform, sollen aber nicht hierauf beschränkt sein.

Sehr vorteilhaft beträgt ist Breite des Trennsystems auf der Unterseite des Klebebandes (also die Ausdehnung in y-Richtung), gemessen von den am weitesten nach rechts ragenden vorspringenden Kantenbereichen der rechten Trennsystem-Begrenzungskante (r_{K}) bis zur linken Trennsystem-Begrenzungskante (l_{K}), bzw. wenn diese Kante nicht gradlinig verläuft bis zu den am weitesten nach nach links vorspringenden Kantenbereichen der linken Trennsystem-Begrenzungskante (l_{K}) geringer als die Breite des Klebebandes (K), also dessen Ausdehnung in y-Richtung.
In einer bevorzugten Vorgehensweise ist das Klebeband mindestens doppelt so breit wie das Trennsystem auf seiner Unterseite, bezogen auf die vorstehenden Breite-Begriffe.

Die Breite des Klebebandes (der Abstand in y-Richtung zwischen der rechten (r_{K}) und der linken (l_{K}) Klebeband-Begrenzungskante) beträgt vorteilhaft zwischen 30 und 120 mm, mehr bevorzugt zwischen 40 und 80 mm, ganz besonders bevorzugt 50 mm.

Der Abstand (ΔE) in der Richtung senkrecht zur Basislinie (X) zwischen den am weitesten rechts liegenden Maxima (Eₘₐₓ) und den am weitesten links liegenden Minima (Eₘᵢₙ) der Kurve (F), für die Ausführungsformen mit solchen Maxima, deren Ausrichtung senkrecht zur Basislinie jeweils gleich ist, und solchen Minima, deren Ausrichtung senkrecht zur Basislinie ebenfalls jeweils gleich ist, insbesondere mit periodisch abfolgenden identischen Wellenbergen und identischen Wellentälern, entsprechend der Abstand (ΔE) in der Richtung senkrecht zur Basislinie (X) zwischen den Maxima (Eₘₐₓ) und den Minima (Eₘᵢₙ), liegt bevorzugt in einem Bereich von 5 bis 30 mm, bevorzugt von 10 bis 20 mm, sehr bevorzugt bei 15 mm.

Der Abstand in der Richtung senkrecht zur Basislinie (X) zwischen den am weitesten rechts liegenden Maxima (Eₘₐₓ) [für die Ausführungsformen mit solchen Maxima, deren Ausrichtung senkrecht zur Basislinie jeweils gleich ist, entsprechend der Abstand (ΔE) in der Richtung senkrecht zur Basislinie (X) gemessen von den Maxima (Eₘₐₓ)] der rechten Begrenzungskante r_{S} des Trennsystems, und der linken Begrenzungskante (l_{S}] des Trennsystems, also die Breite des Trennsystems, beträgt bevorzugt bis zu 40 mm, besonders zwischen 15 und 30 mm, ganz besonders bevorzugt 25 mm.

In vorteilhafter Weise liegt das Verhältnis der Ausdehnung der ansteigenden Kurvenabschnitte (Bezugszeichen "s" in den Figuren") in x-Richtung zur Ausdehnung der abfallenden Kurvenabschnitte (Bezugszeichen "f" in den Figuren) in x-Richtung in den Grenzen von 10:1 bis (1,25):1, bevorzugt in den Grenzen von 7:1 bis (1,5):1, und ganz bevorzugt in den Grenzen von 5:1 bis 2:1.
Sehr vorteilhaft ist es, wenn die Ausdehnung der ansteigenden Kurvenabschnitte (Bezugszeichen "s" in den Figuren") in x-Richtung 10 bis 40 mm, bevorzugt 15 bis 30 mm, ganz bevorzugt 20 bis 25 mm.

Weiter bevorzugt beträgt die Ausdehnung der abfallenden Kurvenabschnitte (Bezugszeichen "f" in den Figuren) in x-Richtung 5 bis 30 mm, bevorzugt 8 bis 20 mm, ganz bevorzugt 10 bis 12,5 mm.

Die Steilheiten des ansteigenden Kurvenabschnitts und des abfallenden Kurvenabschnitts sind unabhängig voneinander bevorzugt wie folgt dimensioniert (vgl. zur Veranschaulichung die Figur 2, ohne sich durch die dort dargestellte Kurvenform hinsichtlich der Allgemeinheit der nachfolgenden Angaben einschränken zu wollen):
Der von der Gerade (Gₛ) im ansteigenden Kurvenabschnitt (s) der Kurve (F) und der Basislinie (X) eingeschlossene spitze Winkel (α) beträgt bevorzugt bis zu 45 °, insbesondere zwischen 18 ° und 40 °, ganz besonders zwischen 30 ° und 35 °, am besten 33 °.
Der von der Geraden (G_{f}) im abfallenden Kurvenabschnitt (f) der Kurve (F) und der Basislinie (X) eingeschlossenen spitze Winkel (β) ist größer als der von der Gerade (Gₛ) im ansteigenden Kurvenabschnitt (s) der Kurve (F) und der Basislinie (X) eingeschlossene spitze Winkel (α) (bezogen auf die jeweiligen Beträge der Winkel ohne Berücksichtigung der Drehrichtung). Der von der Gerade (G_{f}) im abfallenden Kurvenabschnitt (f) der Kurve (F) und der Basislinie (X) eingeschlossene spitze Winkel (β) beträgt bevorzugt zwischen 30 und 90 °, insbesondere zwischen 50 ° und 85 °, ganz besonders zwischen 60 ° und 80 °, am besten 76 °.
Die Drehrichtung von der Basislinie auf die Gerade (G_{f}) im abfallenden Kurvenabschnitt (f) ist in der Regel der Drehrichtung von der Basislinie auf die Gerade (Gₛ) im ansteigenden Kurvenabschnitt (s) entgegengesetzt, wobei der von der Gerade (Gₛ) im ansteigenden Kurvenabschnitt (s) der Kurve (F) und der Basislinie (X) eingeschlossene spitze Winkel (α) insbesondere zur Vorzugsrichtung (v) hin geöffnet ist, der Scheitelpunkt also in der der Vorzugsrichtung entgegengesetzten Richtung liegt.
Unter den Gegenstand der Erfindung fallen aber auch solche Ausführungsformen, bei denen die beiden Drehrichtungen gleichgerichtet sind (insbesondere solche, bei denen beide Winkel (α, β) den Scheitelpunkt in der Richtung entgegen der Vorzugsrichtung aufweisen. Die Kurvenform (F) entspricht dann einer "Wellenlinie" mit in Vorzugsrichtung "überspringenden" Wellenbergen.

Kann die linke Begrenzungskante (l_{S}) des Trennsystems (S) durch eine Kurve F* abgebildet werden, die sich durch eine Verschiebung der die rechten Trennsystem-Begrenzungskante (r_{S}) abbildenden Kurve F entlang einer auf die Basislinie (X) senkrecht stehenden Linie, insbesondere entgegen der y-Richtung, ergibt (vgl. hierzu Figur 5), so ist es insbesondere vorteilhaft, wenn die Verschiebung Δ₌ bis zu 25 mm, insbesondere 5 bis 20 mm, ganz besonders 10 mm beträgt.
Vorteilhafte Trennsysteme sind dadurch gekennzeichnet, dass die Breite (ΔGₛ) im ansteigenden Trennsystembereich bis 20 mm, insbesondere 5 bis 15 mm, ganz besonders 10 mm beträgt. Die Breite (ΔGₛ) im ansteigenden Trennsystembereich ist dabei definiert als der Abstand der Gerade (Gₛ) im ansteigenden Kurvenabschnitt (s) der Kurve (F), gehörig zur rechten Trennsystem-Begrenzungskante (r_{S}), zu der entsprechenden Gerade (Gₛ*) im ansteigenden Kurvenbereich (s*) der Kurve (F^{#}), gehörig zur linken Trennsystem-Begrenzungskante (l_{S}).
Die mit Stern (*) gekennzeichneten Bezugszeichen beziehen sich dabei auf die zur linken Trennsystem-Begrenzungskante (l_{S}) gehörige Kurve (F*), wobei die Bedeutung der Bezugszeichen derjenigen Bedeutung der gleichnamigen Bezugszeichen ohne Stern (*) entspricht, die zur die rechte Trennsystem-Begrenzungskante (r_{S}) abbildenden Kurve (F) gehören.

Findet zudem eine Verschiebung in x-Richtung statt, insbesondere also bei einer Ausführungsform, wie sie in Figur 6 dargestellt ist, ist es besonders vorteilhaft, wenn die Verschiebung parallel zu der die linke Trennsystem-Begrenzungskante (l_{S}) abbildenden Kurve F^{#} gehörigen Basislinie (X^{#}) um einen solchen Betrag insbesondere in negative x-Richtung erfolgt, dass der Abstand (ΔGₛ) zwischen den ansteigenden Kurvenabschnitten (s, s^{#}) gehörigen Geraden (G_{f}, G_{f}^{#}) gleich dem Abstand (ΔG_{f}) zwischen den abfallenden Kurvenabschnitten (f, f^{#}) gehörigen Geraden (G_{f}, G_{f}^{#}) ist (die absoluten Werte entsprechen dabei bevorzugt denen, wie sie für den Abstand (ΔGₛ) für den vorstehend genannten Fall bereist definiert sind).
Die mit Raute (^{#}) gekennzeichneten Bezugszeichen beziehen sich hier entsprechend dem oben gesagten auf die zur linken Trennsystem-Begrenzungskante (l_{S}) gehörige Kurve (F^{#}), wobei die Bedeutung der Bezugszeichen derjenigen Bedeutung der gleichnamigen Bezugszeichen ohne Raute (^{#}) entspricht, die zur die linke Trennsystem-Begrenzungskante (l_{S}) abbildenden Kurve (F) gehören.

Wie bereits weiter oben beschrieben kann das Trennsystem (S) bündig an der rechten Längskante (r_{K}) des Klebebandes (K) oder von dieser im Abstand (V) eingerückt angeordnet sein. Für den Einsatz der Erfindung im fliegenden Rollenwechsel hat es sich als sehr vorteilhaft herausgestellt, wenn das Trennsystem (S) in einem Abstand (V) Abstand von bis zu 15 mm, besonders 0,5 bis 7 mm, besser in einem Abstand von 1,5 bis 4 mm, ganz besonders bevorzugt von 2 bis 3,5 mm eingerückt ist. Die Bündigkeit bzw. die vorgenannten Abstands-Werte beziehen sich insbesondere auf den Abstand zwischen der rechten Begrenzungskante (r_{K}) des Klebebandes (K) und einer insbesondere auf eine zur x-Achse parallele, durch die am weitesten rechts verlaufenden Maxima gedacht verlaufende Hilfslinie Q) (vgl. Figuren 1b und 1d).
Wie Versuche ergeben haben, ist es für eine erfolgreiche Prozessführung bei hohen Geschwindigkeiten vorteilhaft, die Kraft für den Spaltvorgang in den spaltfähigen Träger des Spaltstreifens einzuleiten, da es sonst zu lokal unkontrollierten Reißprozessen (oben als "Reißer" bezeichnet) kommt. Hierzu dient der überstehende, durch den Abstand des Spaltstreifens von der Längskante definierte Abschnitt des Klebebandes als Krafteinleithilfe. Reißer konnten dann besonders erfolgreich vermieden werden, wenn dieser Abstand eine gewisse Größe erreicht.
Ist die Einrückung allerdings zu groß (insbesondere größer 3,5 mm), so kommt es vermehrt zu einem Umschlagen des überstehenden, vorderen Abschnitts des Spleißklebebandes und ebenfalls zu unkontrolliertem Verhalten während des Spleißprozesses, wie man auch in Versuchen feststellt.

Der Schnitt bzw. die Sollbruchstelle (P) im gegebenenfalls vorhandenen Abdeckmaterial (A) kann bevorzugt in einem Abstand von 20 bis 40 mm von der linken Begrenzungskante (l_{K}) des Klebebands vorgesehen sein.

Als ganz hervorragend geeignet hat sich ein Klebeband mit den folgenden Abmessungen herausgestellt:
Die folgenden Angaben verstehen sich mit einer (produktionsbedingten) Genauigkeitstoleranz; diese sei mit etwa 5 % angenommen.
Das Klebeband hat eine Breite (Ausdehnung in y-Richtung) von 50 mm und besitzt ein Trennsystem mit einer regelmäßigen Wellenform, wie diese in Figur 6 dargestellt ist, dessen Basislinie (X) der x-Achse des Klebebandes entspricht. Die Einrückung das unterklebten Trennsystem (S) von der rechten Längskante (r_{K}) des Klebebandes (K) beträgt 2 mm.
Die Ausdehnung eines jeden ansteigenden Kurvenabschnitte (Bezugszeichen "s" in den Figuren") in x-Richtung beträgt 25 mm, die eines jeden abfallenden Kurvenabschnitts in x-Richtung beträgt 5 mm.

Die linke Begrenzungskante (l_{S}) ist wie die rechte Begrenzungskante (r_{S}) des Trennsystems (S) geformt und gegenüber dieser um Δ_{L} = 10 mm in y-Richtung und um Δ₌ = 3 mm in x-Richtung verschoben.
Der von der Geraden (Gₛ) im abfallenden Kurvenabschnitt (s) der Kurve (F) und der Basislinie (X) eingeschlossenen spitze Winkel (α) beträgt 33 °. Der von der Geraden (G_{f}) im abfallenden Kurvenabschnitt (f) der Kurve (F) und der Basislinie (X) eingeschlossenen spitze Winkel (β) beträgt 76 ° und weist einen dem Winkel (α) entgegengesetzten Drehsinn auf (entsprechend der Darstellung in der Figur 2).

Die erfindungsgemäßen Klebebänder sind hervorragend geeignet, die Probleme beim Abrollen einer Klebebandrolle zu vermeiden oder zumindest ganz erheblich zu vermindern. Gegenstand der Erfindung ist dementsprechend ein zur "Rolle" gewickeltes erfindungsgemäßes Klebeband, ein sogenannter Rollenwickel. Für derartige Wickel wird üblicherweise die Bezeichnung "Rolle" oder "Klebebandrolle" verwendet, auch wenn es sich bei den Wickeln streng betrachtet um eine archimedische Spirale handelt. Wenn im Rahmen dieser Schrift von Rolle, Klebebandrolle, Rollenwickel oder Wickel geredet wird, so ist hiermit die Wicklung des Klebebandes in einer Weise gemeint, dass der Seitenschnitt der Wicklung die Form einer archimedischen Spirale besitzt (vgl. hierzu Figur 1c).
Insbesondere vorteilhaft ist eine solche Rollenwicklung, bei der das aufgewickelte Klebeband mit einem Abdeckmaterial eingedeckt ist, wie dies zuvor für das Klebeband an sich bereits beschrieben wurde.

Gegenstand der Erfindung ist weiterhin ein Verfahren für den fliegenden Rollenwechsel unter Einsatz eines erfindungsgemäßen Klebesystems oder eines erfindungsgemäßen Klebebandes.

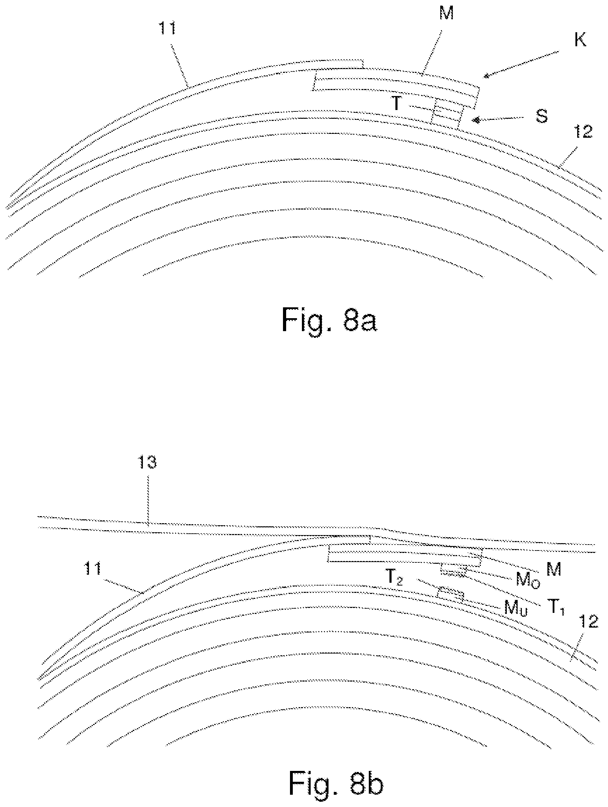

Das erfindungsgemäße Verfahren zum Verbinden zweier Flachbahnen während des fliegenden Rollenwechsel von auf Rollen aufgewickelten Flachbahnmaterial wird schematisch in den Figuren 8a und 8b dargestellt, ohne sich durch die Abbildung unnötig im Gegenstand der Erfindung beschränken zu wollen, hier anhand des Beispiels eines erfindungsgemäßen Klebebandes.
Bei einer ersten Variante des erfindungsgemäßen Verfahren wird die oberste Flachbahnwicklung (11) (insbesondere deren Ende oder deren Endbereich) einer neuen Rolle mit einem zur Erzielung einer wieder klebeflächenfrei trennbaren Klebeverbindung geeigneten Klebesystem (S) an der darunter liegenden Flachbahnwicklung (12) fixiert, so dass ein zum Verbinden mit der ablaufenden Flachbahn (13) benötigter Teil einer Selbstklebemasse (M_{O}) offenliegt. Daraufhin wird die so ausgerüstete neue Rolle neben eine fast gänzlich abgespulte zu ersetzende alte Rolle platziert und auf die im wesentlichen gleiche Drehgeschwindigkeit wie diese beschleunigt, dann gegen die alte Flachbahn (13) gedrückt, wobei die offenliegende Selbstklebemasse (M_{O}) des Klebesystems (S) mit der alten Flachbahn (13) bei im wesentlichen gleichen Geschwindigkeiten der Bahnen verklebt, während zugleich die Verklebung der obersten Flachbahnlage (Endlage der Wicklung) (11) auf der darunter liegenden Flachbahnlage (12) derart flächig trennt, dass nach dem Trennvorgang keine klebenden Bereiche offenliegen, wobei ein erfindungsgemäßes Klebesystem (S) eingesetzt wird. Die Trennung der Verklebung der obersten Flachbahnlage (11) mit der darunter liegenden Flachbahnlage (12) erfolgt dabei insbesondere nach einem der für das erfindungsgemäße Klebesystem (Trennsystem) (S) bereits beschriebenen Trennmechanismen.

Bei einer weiteren Variante des erfindungsgemäßen Verfahrens, wie sie in den Figuren 8a uns 8b dargestellt ist, wird die oberste Flachbahnwicklung (11) (insbesondere deren Ende oder deren Endbereich) einer neuen Rolle mit einem Klebeband (K), umfassend zumindest ein zur Erzielung einer wieder klebeflächenfrei trennbaren Klebeverbindung geeignetes Trennsystem (S), an der darunter liegenden Flachbahnwicklung (12) fixiert, so dass ein zum Verbinden mit der ablaufenden Flachbahn (13) benötigter Teil einer Selbstklebemasse (M) offenliegt (vgl. Figur 8a). Daraufhin wird die so ausgerüstete neue Rolle neben eine fast gänzlich abgespulte zu ersetzende alte Rolle platziert und auf die im wesentlichen gleiche Drehgeschwindigkeit wie diese beschleunigt, dann gegen die alte Flachbahn (13) gedrückt, wobei die offenliegende Selbstklebemasse (M) des Klebebandes (K) mit der alten Flachbahn (13) bei im wesentlichen gleichen Geschwindigkeiten der Bahnen verklebt, während zugleich die mittels des Trennsystem (S) bewirkte Verklebung der obersten Flachbahnlage (Endlage der Wicklung) (11) auf der darunter liegenden Flachbahnlage (12) derart flächig trennt, dass nach dem Trennvorgang keine klebenden Bereiche offenliegen, wobei ein erfindungsgemäßes Klebeband eingesetzt wird. Die Trennung der Verklebung der obersten Flachbahnlage (11) mit der darunter liegenden Flachbahnlage (12) erfolgt dabei insbesondere nach einem der für das erfindungsgemäße Klebeband (K) bereits beschriebenen Trennmechanismen (vgl. Figur 8b).
In den Figuren 8a und 8b ist beispielhaft, ohne sich dadurch unnötig im Erfindungsgedanken einschränken zu wollen, ein Trennsystem (S) mit einem Spaltträger (T) dargestellt, welche eine untere (M_{U}) und eine obere (M_{O}) Klebemasse aufweist (siehe hierzu auch die oben gemachten Ausführungen zu derartigen Trennsystemen). Der Trennvorgang wird durch ein Spalten des Systemträgers (T) bewirkt, wobei die Klebemassen (M_{O}, M_{U}) von den Spaltprodukten (T₁, T₂) des Spaltträgers (T) nichtklebend abgedeckt werden.

In einer Weiterentwicklung des erfinderischen Verfahrens wird das Klebeband rechtwinklig zur laufenden Flachbahn verklebt. In anderen vorteilhaften Varianten des erfindungsgemäßen Verfahrens kann die Verklebung des Klebebandes auch in einem spitzen Winkel von bis zu 30° zur laufenden Flachbahn, insbesondere von bis zu 10° erfolgen.
Der Spaltvorgang [Trennung der Verklebung der obersten Flachbahnlage (11) mit der darunter liegenden Flachbahnlage (12)] erfolgt dann - insbesondere im Fall des rechtwinklig zur laufenden Flachbahn verklebten Klebebandes - quer zur Basislinie, das heißt, der Spalt-. bzw. Trennvorgang beginnt in den Maxima bzw. Maximumbereichen der rechten Begrenzungskante (r_{S}) des Trennsystems (S) und verläuft in Richtung auf dessen Minima bzw. Minimumbereiche, also in Richtung der negativen y-Achse.

Bei dem Spliceverfahren wird das erfindungsgemäße Klebeband (K) in einer geraden Linie unter das Ende der obersten Flachbahnlage (11) einer neuen Flachbahnrolle (oder in einem geringen Abstand vom Ende der obersten Flachbahnwicklung) auf die neue Flachbahnrolle verklebt, so dass ein Teil des Klebebandes (K) frei bleibt, während die Unterseite (U_{K}) des Klebebandes mittels des Trennsystems (S) [im speziellen für die entsprechenden Klebeband-Ausführungsformen mit der Klebemasse (M_{U}) des Trennsystems (S); hier nicht im einzelnen dargestellt] auf der darunter liegenden Flachbahnlage verklebt und damit die oberste Bahnlage (insbesondere das Ende der obersten Bahnlage) sichert, wobei gegebenenfalls zunächst nur ein Teil (A₂) der gegebenenfalls auf der Selbstklebemasse (M) befindlichen Abdeckung (A) abgezogen wurde, so dass der zum Spliceverfahren benötigte Teil der Selbstklebemasse noch mit der Abdeckung (A₁) abgedeckt ist und die Rolle in diesem Zustand keine freie klebende Fläche aufweist, worauf zur abschließenden Vorbereitung des Spliceverfahrens die gegebenenfalls noch vorhandene restliche Abdeckung (A₁) entfernt wird, worauf die so ausgerüstete neue Rolle neben eine fast gänzlich abgespulte, zu ersetzende alte Rolle platziert wird und auf die gleiche Drehgeschwindigkeit wie diese beschleunigt wird, dann gegen die alte Bahn (13) gedrückt wird, wobei die offenliegende Selbstklebemasse (M) des Klebebandes (K) mit der alten Bahn (13) bei im wesentlichen gleichen Geschwindigkeiten der Bahnen verklebt, während zugleich das Trennsystem (S) die Verklebung zwischen der obersten Flachbahnlage (11) und der darunter liegenden Flachbahnlage (12) trennt, wobei beide Flächen im Bereich der bisherigen Verklebung der obersten Flachbahnlage (11) mit der darunter liegenden Flachbahnwicklung (12) nichtklebend verbleiben.
Nach dem Kontakt des Klebebandes (K) mit der ablaufenden Bahn (13) kommt es also zum Trennvorgang mittels des Trennsystems (S) des Klebebandes (K), so dass die oberste Flachbahnwicklung (11) des neuen Ballens freigegeben wird und keine klebrigen Rückstände mehr offen vorliegen.

Bei den Flachbahnen handelt es sich insbesondere um Papierbahnen und/oder um Folienbahnen und/oder um Textilmaterialbahnen (Gewebe, Gewirke, Vliese oder dergleichen).

Die der Erfindung zugrunde liegende Idee ist es, das trennfähige bzw. spaltbare Trennsystem als zusammenhängendes Flächengebilde auszuführen, bei dem die Spaltstreifengeometrie derart gestaltet ist, dass die quer zur Abwickelrichtung stehenden Anlaufkantenbereiche des trennfähigen bzw. spaltenden Trennsystems mit einer geringeren Steigung versehen sind als die quer zur Abwickelrichtung stehenden hinteren (in Vorzugsrichtung näher an der Rollenwicklung befindlichen) abfallenden Kantenbereiche des spaltenden Trennsystems.
Zudem ist es insbesondere vorteilhaft, wenn das Trennsystem an seiner Kante, an der der Trenn- bzw. Spaltvorgang beginnt, nicht zackig ausgeführt ist, sondern in den Spitzen abgerundet ist. Dies führt zu einer Vergrößerung der Klebefläche, die immer eine ausreichende Klebkraft generiert und dadurch ein sicheres Spalten gewährleistet.

Durch die erfindungsgemäße Ausgestaltung wird das in vielen Fällen auftretende frühzeitige Anspalten des Spaltstreifens an den quer zur Abwickelrichtung stehenden vorderen Anlaufkanten, insbesondere beim Abwickeln des Klebebandes von der "Rolle" (Klebebandwicklung), verhindert. Das frühzeitige Anspalten tritt vor allem bei symmetrischen Wellenformen bzw. Trennsystemgeometrien auf, die sich durch eine hohe Steigung bezüglich der Anlaufkantenbereiche des trennfähigen bzw. spaltbaren Trennsystems auszeichnen.

Durch die Form des wellenförmigen Trennsystemstreifens kann die entsprechende Spaltkraft -abhängig vom Material- vorteilhaft eingestellt werden. Die Form bzw. Geometrie des Trennsystems führt dazu, dass in Querrichtung des Klebebandes eine möglichst geringe Kraft zum Anspalten erforderlich ist. Diese Kraft darf aber auch nicht zu gering sein, um in der Beschleunigungsphase des Spliceprozesses die Rolle bzw. den Ballens des zu spleißenden Flachbahnmaterials, der mit dem erfindungsgemäßen Klebeband verklebt ist, nicht zu früh zu öffnen, und so zu einem Abriss zu führen. Dies gilt vor allem für gurtgetriebene Anlagen, bei denen im Bereich des Gurtes eine besondere Festigkeit erforderlich ist.

Das erfindungsgemäße Klebeband hat sich als hervorragend für den bestimmungsgemäßen Einsatz geeignet gezeigt.
Gleichzeitig konnte durch die Gestaltung des Trennsystems auf der Unterseite des Klebebandes, welches für die wieder trennbare Verklebung vorgesehen ist, das aus dem Stand der Technik für Klebebänder, deren Trennsysteme (dort überwiegend Spaltsysteme) symmetrische zackige Begrenzungskanten oder symmetrische wellenförmige Begrenzungskante aufweisen, bekannte Problem vermieden werden, dass beim Abrollen des erfindungsgemäßen Klebebandes von der Rolle bereist ein ungewolltes Anspalten bzw. ein ungewollt eintretendes Auftrennen des Trennmechanismus des Klebebandes eintritt, was das Klebeband für den bestimmungsgemäßen Einsatz zunehmend ungeeignet werden lässt (insbesondere fehlende Festigkeit bei Anfahren der Rolle auf die beim Splicevorgang benötigten Geschwindigkeiten, da das Trennsystem bereits angespalten ist und den Fliehkräften nicht mehr genügend Widerstand entgegensetzen kann, um die Klebeverbindung zwischen der obersten Flachbahnwicklung und der darunter liegenden Flachbahnwicklung aufrecht zu halten).

## Patentansprüche

1. Klebesystem für den fliegenden Rollenwechsel ("Trennsystem"), das geeignet ist, eine Klebeverbindung auf einem Substrat zu bewirken, die derart wieder trennbar ist, dass weder auf der Unterseite (U_{K}) des Klebebandes (K) noch auf dem Substrat im Bereich der getrennten Klebeverbindung klebende Rückstände verbleiben, indem das Trennsystem (S) eine flächig spaltbare einlagige oder einstückige Schicht, zwei aufeinander laminierte, voneinander delaminierbare Schichten und/oder eine von einer anderen Schicht des Klebebandes wiederablösbare Schicht umfasst,
wobei das Trennsystem (S) seinerseits einen Träger (T) ("Systemträger") umfasst, der auf seiner Oberseite (O_{T}) und seiner Unterseite (U_{T}) jeweils mit einer Klebemassenschicht (M_{O}, M_{U}) versehen und flächig spaltbar oder delaminierbar ist,
wobei der Systemträger (T) ein einlagiges Papier oder ein Verbund aus mindestens zwei Papierschichten, ein Verbund aus mindestens zwei Folienschichten oder ein Verbund aus mindestens einer Papierschicht und mindestens einer Folienschicht ist,
wobei zumindest die rechte Begrenzungskante (r_{S}) des Trennsystems (S) auf der Klebebandunterseite (U_{K}) in Form einer sich entlang einer geraden Basislinie (X) erstreckenden Kurve (F) ("rechte Kurve") ausgebildet ist, die durch eine Abfolge von ansteigenden (s) und abfallenden (f) Kurvenabschnitten charakterisiert ist,
so dass zwischen einem jeweiligen ansteigenden Kurvenabschnitt (s) und einem in einer Vorzugsrichtung (v) darauf folgenden abfallenden Kurvenabschnitt (f) im für den durch diese beiden Kurvenabschnitte gebildeten Kurvenbereich ein am weitesten rechts liegender Punkt (Eₘₐₓ) ("Maximum") oder eine Mehrzahl direkt benachbarter am weitesten rechts liegender Punkte (Bₘₐₓ) ("Maximumsbereich") gebildet wird,
und so das zwischen einem jeweiligen abfallenden Kurvenabschnitt (f) und einem in der Vorzugsrichtung (v) darauf folgenden ansteigenden Kurvenabschnitt (s) im für den durch diese beiden Kurvenabschnitte gebildeten Kurvenbereich ein am weitesten links liegender Punkt (Eₘᵢₙ) ("Minimum") oder eine Mehrzahl direkt benachbarter am weitesten links liegender Punkte (Bₘᵢₙ) ("Minimumsbereich") gebildet wird,
wobei für die Mehrzahl der durch einen jeweiligen ansteigenden Kurvenabschnitt (s), ein jeweils darauf folgendes Maximum (Eₘₐₓ) bzw. einen jeweils in der Vorzugsrichtung (v) darauf folgenden Maximumsbereich (Bₘₐₓ) und einen jeweils in der Vorzugsrichtung (v) darauf wieder folgenden abfallenden Kurvenabschnitt (f) gebildeten Kurvenbereiche (R) ("rechts vorspringender Kurvenbereich") gilt, dass die Steilheit im ansteigenden Kurvenabschnitt (s) geringer ist als die Steilheit im in der Vorzugsrichtung (v) darauf folgenden abfallenden Kurvenabschnitt (f), wobei die Steilheit (im Sinne dieser Schrift) eines Kurvenabschnitts den Betrag der Steigung einer Geraden ("Steilheitsgerade") durch die zwei den Kurvenabschnitt begrenzenden Kurvenpunkte bedeutet.

2. Klebeband für den fliegenden Rollenwechsel mit einer linken (l_{K}) und einer rechten Begrenzungskante (r_{K}), umfassend zumindest einen Hauptträger (H) und eine erste Selbstklebemassenschicht (M) auf der Oberseite (O_{K}) des Klebebandes (K), wobei auf der Unterseite (U_{K}) des Klebebandes (K) zumindest ein Trennsystem nach Anspruch 1 vorgesehen ist.

3. Klebeband nach einem der vorangehenden Ansprüche, **dadurch gekennzeichnet, dass** zumindest die rechte Begrenzungskante (r_{K}) des Trennsystems (S) in Form einer sich entlang einer geraden Basislinie (X) erstreckenden Kurve (F) mit einer Vielzahl an Maxima (Eₘₐₓ) und Minima (Eₘᵢₙ) ausgebildet ist, wobei die Steilheitsgerade (G_{f}) zwischen einem jeweiligen Minimum (Eₘᵢₙ) und dem entlang einer Vorzugsrichtung (v) der Basislinie (X) nächstfolgenden Maximum (Eₘₐₓ) der Kurve (F) eine geringere Steilheit aufweist als die Steilheitsgerade (Gₛ) zwischen diesem Maximum (Eₘₐₓ) und dem darauf wieder nächstfolgenden Minimum (Eₘᵢₙ).

4. Klebeband nach einem der vorangehenden Ansprüche, **dadurch gekennzeichnet, dass** die Basislinie (X) parallel zur Längsrichtung des Klebebandes (x-Richtung) verläuft.

5. Klebeband nach einem der vorangehenden Ansprüche, **dadurch gekennzeichnet, dass** die der rechten Begrenzungskante (r_{S}) gegenüberliegende linke Begrenzungskante (l_{S}) des Trennsystems (S) in Form einer Kurve (F*) ausgebildet ist, die sich durch Parallelverschiebung der die rechte Begrenzungskante (r_{S}) des Trennsystems (S) bildenden Kurve (F) entlang einer auf die Basislinie (X) senkrecht stehenden Linie ergibt.

6. Klebeband nach Anspruch 4, **dadurch gekennzeichnet, dass**
die der rechten Begrenzungskante (rs) gegenüberliegende linke Begrenzungskante (ls) des Trennsystems (S) in Form einer Kurve (F^{#}) ausgebildet ist, die sich durch Parallelverschiebung der die rechte Begrenzungskante (rs) des Trennsystems (S) bildenden Kurve (F) entlang einer auf die Basislinie (X) senkrecht stehenden Linie und gleichzeitige Längsverschiebung in Richtung der Basislinie (X) ergibt.

7. Klebeband nach einem der Ansprüche 1 bis 5, **dadurch gekennzeichnet, dass** das Trennsystem (S) eine Polymermasse umfasst, die die Klebeverbindung bewirkt.

8. Klebeband nach Anspruch 7, **dadurch gekennzeichnet, dass**
das Polymer in Drucktechnik aufgebracht ist.

9. Klebeband nach Anspruch 8, **dadurch gekennzeichnet, dass**
das Polymer durch Siebdruck oder durch Tiefdruck aufgebracht ist.

10. Klebeband nach einem der vorangehenden Ansprüche, **dadurch gekennzeichnet, dass** die rechte Kurve (F) im Bereich ihrer Maxima (Eₘₐₓ) mathematisch differenzierbar ist.

11. Klebeband nach einer der vorangehenden Ansprüche, **dadurch gekennzeichnet, dass** die rechte Kurve (F) stets differenzierbar ist.

12. Klebeband nach einem der vorangehenden Ansprüche, **dadurch gekennzeichnet, dass** die rechte Kurve (F) eine periodische Abfolge jeweils identischer Maxima (Eₘₐₓ) und Minima (Eₘᵢₙ) aufweist.

13. Klebeband nach einem der vorangehenden Ansprüche, **dadurch gekennzeichnet, dass** die die Klebmassenschicht (M) auf der Oberseite (O_{K}) des Klebebandes (K) bildende Klebmasse eine solche auf Acrylatbasis, eine solche auf Naturkautschukbasis oder eine solche auf Synthesekautschukbasis ist.

14. Klebeband nach einem der vorangehenden Ansprüche, **dadurch gekennzeichnet, dass** auf der Unterseite (U_{K}) des Klebebandes (K) ein oder mehrere weitere Trennsysteme (T) vorgesehen sind.

15. Klebeband nach Anspruch 14, **dadurch gekennzeichnet, dass**
nicht alle Trennsysteme (T) auf der Klebeband-Unterseite (U_{K}) dieselbe Geometrie aufweisen.

16. Verfahren zum Verbinden zweier Flachbahnen während des fliegenden
Rollenwechsels von auf Rollen aufgewickelten Flachbahnmaterial unter Verwendung eines Klebesystems oder Klebebandes nach einem der Ansprüche 1 bis 15.

17. Verfahren nach Anspruch 16, bei welchem die oberste Flachbahnwicklung (11) einer neuen Rolle mit einem Klebeband (K), umfassend zumindest ein zur Erzielung einer wieder klebeflächenfrei trennbaren Klebeverbindung geeignetes Trennsystem (S) an der darunter liegenden Flachbahnwicklung (12), fixiert wird, so dass ein zum Verbinden mit der ablaufenden Flachbahn (13) benötigter Teil einer Selbstklebemasse (M) auf der Oberseite (O_{K}) des Klebebandes (K) offenliegt, woraufhin die so ausgerüstete neue Rolle neben eine fast gänzlich abgespulte zu ersetzende alte Rolle platziert und auf die im wesentlichen gleiche Drehgeschwindigkeit wie diese beschleunigt wird, dann gegen die alte Flachbahn (13) gedrückt wird, wobei die offenliegende Selbstklebemasse (M) des Klebebandes (K) mit der alten Flachbahn (13) bei im wesentlichen gleichen Geschwindigkeiten der Bahnen verklebt, während zugleich die mittels des Trennsystem (S) bewirkte Verklebung der obersten Flachbahnlage (11) auf der darunter liegenden Flachbahnlage (12) derart flächig trennt, dass nach dem Trennvorgang keine klebenden Bereiche offenliegen, **dadurch gekennzeichnet, dass**
ein Klebeband nach einem der Ansprüche 2 bis 15 eingesetzt wird.

18. Verfahren nach Anspruch 16, **dadurch gekennzeichnet, dass**
der Trennvorgang des Trennsystems auf der rechten Klebebandseite (r_{K}) beginnt, wobei der Spaltvorgang quer zur Basislinie verläuft.

19. Rollenwickel eines Klebesystems oder eines Klebebandes nach einem der Ansprüche 1 Bis 15.

## Claims

1. Adhesive system for flying splice ("parting system"), suitable for producing an adhesive bond on a substrate that can be parted again in such a way that adhesive residues remain neither on the reverse (U_{K}) of the adhesive tape (K) nor on the substrate in the region of the parted adhesive bond, in that the parting system (S) comprises a two-dimensionally splittable single-ply or single-piece layer, two layers that are laminated to one another and can be delaminated from one another and/or a layer that can be redetached from another layer of the adhesive tape,
the parting system (S) for its part comprising a carrier (T) ("system carrier") which is provided on each of its obverse (O_{T}) and its reverse (U_{T}) with a layer (M_{O}, M_{U}) of adhesive and is two-dimensionally splittable or delaminable, the system carrier (T) being a single-ply paper or an assembly of at least two film layers or an assembly of at least one paper layer and at least one film layer,
at least the right boundary edge (rs) of the parting system (S) on the reverse (U_{K}) of the adhesive tape being designed in the form of a line (F) that extends along a straight baseline (X) ("right line") and is **characterized by** a succession of rising (s) and falling (f) line sections,
so that between each rising line section (s) falling line section (f) that follows it in a preferential direction (v), in the line region formed by these two line sections, a furthest-right point (Eₘₐₓ) ("maximum") or a plurality of directly adjacent furthest-right points (Bₘₐₓ) ("maximum region") is formed,
and so that, between each falling line section (f) and rising line section (s) that follows it in the preferential direction (v), in the line region formed by these two line sections, a furthest-left point (Eₘᵢₙ) ("minimum") or a plurality of directly adjacent furthest-left points (Bₘᵢₙ) ("minimum region") is formed,
it being the case, for the majority of the line regions (R) ("rightwardly projecting line region") formed by a respective rising line section (s), a respective subsequent maximum (Eₘₐₓ) or a respective maximum region (Bₘₐₓ) following in the preferential direction (v), and a respective falling line section (f) following again in the preferential direction (v), that the steepness in the rising line section (s) is lower than the steepness in the falling line section (f) that follows it in the preferential direction (v), the steepness (in the sense of this specification) of a line section denoting the amount of the slope of a straight line ("straight steepness line") through the two line points bounding the line section.

2. Adhesive tape for flying splice, having a left (l_{K}) and right (r_{K}) boundary edge, comprising at least one main carrier (H) and a first layer (M) of self-adhesive on the obverse (O_{K}) of the adhesive tape (K), the reverse (U_{K}) of the adhesive tape bearing at least one parting system according to Claim 1.

3. Adhesive tape according to either of the preceding claims, **characterized in that** at least the right boundary edge (r_{K}) of the parting system (S) is designed in the form of a line (F) which extends along a straight baseline (X) and has a multiplicity of maxima (Eₘₐₓ) and minima (Eₘᵢₙ), the straight steepness line (G_{f}) between a respective minimum (Eₘᵢₙ) and the maximum (Eₘₐₓ) of the line (F) that follows it most closely along a preferential direction (v) of the baseline (X) having a lower steepness than the straight steepness line (Gₛ) between this maximum (Eₘₐₓ) and the minimum (Eₘᵢₙ) that most closely follows it again.

4. Adhesive tape according to any of the preceding claims, **characterized in that** the baseline (X) extends parallel to the longitudinal direction of the adhesive tape (x-direction).

5. Adhesive tape according to any of the preceding claims, **characterized in that** the left boundary edge (Is), which is opposite to the right boundary edge (rs), of the parting system (S) is designed in the form of a line (F*) which is produced by parallel displacement of the line (F), forming the right boundary edge (rs) of the parting system (S), along a line perpendicular to the baseline (X).

6. Adhesive tape according to Claim 4, **characterized in that**
the left boundary edge (rs), which is opposite to the right boundary edge (Is), of the parting system (S) is designed in the form of a line (F^{#}) which is produced by parallel displacement of the line (F), forming the right boundary edge (rs) of the parting system (S), along a line perpendicular to the baseline (X) and simultaneous longitudinal displacement in the direction of the baseline (X).

7. Adhesive tape according to any of Claims 1 to 5, **characterized in that** the parting system (S) comprises a polymer compound which effects the adhesive bond.

8. Adhesive tape according to Claim 7, **characterized in that** the polymer is applied by printing.

9. Adhesive tape according to Claim 8, **characterized in that** the polymer is applied by screen printing or gravure printing.

10. Adhesive tape according to any of the preceding claims, **characterized in that** the right line (F) in the region of its maxima (Eₘₐₓ) can be differentiated mathematically.

11. Adhesive tape according to any of the preceding claims, **characterized in that** the right line (F) can always be differentiated.

12. Adhesive tape according to any of the preceding claims, **characterized in that** the right line (F) has a periodic sequence of in each case identical maxima (Eₘₐₓ) and minima (Eₘᵢₙ).

13. Adhesive tape according to any of the preceding claims, **characterized in that** the adhesive forming the layer (M) of adhesive on the obverse (O_{K}) of the adhesive tape (K) is an adhesive based on acrylate, on natural rubber or on synthetic rubber.

14. Adhesive tape according to any of the preceding claims, **characterized in that** the reverse (U_{K}) of the adhesive tape (K) bears one or more further parting systems (T).

15. Adhesive tape according to Claim 14, **characterized in that**
not all of the parting systems (T) on the adhesive tape reverse (U_{K}) have the same geometry.

16. Method of joining two flat webs during the flying splice of flat-web material wound up to form rolls using an adhesive system or adhesive tape according to any of Claims 1 to 15.

17. Method according to Claim 16, wherein the uppermost flat-web turn (11) of a new roll is fixed to the underlying flat-web turn (12) by an adhesive tape (K) comprising at least one parting system (S) suitable for obtaining an adhesive bond which can be parted again in such a way as to be free of sticky areas, so that a portion of a self-adhesive (M) that is needed for joining to the expiring flat web (13) is exposed on the obverse (O_{K}) of the adhesive tape (K), whereupon the new roll thus equipped is positioned alongside an old roll that is almost completely unwound and requires replacement, and is accelerated to substantially the same rotational speed as that roll, and then pressed against the old flat web (13), the exposed self-adhesive (M) of the adhesive tape (K) bonding to the old flat web (13) with the webs at substantially equal speeds, while at the same time the bond of the uppermost flat-web ply (11) on the underlying flat-web ply (12), said bond having been brought about by means of the parting system (S), undergoes two-dimensional separation such that, after the parting process, there are no adhesive regions exposed, **characterized in that** an adhesive tape according to any of Claims 2 to 15, is used.

18. Method according to Claim 16, **characterized in that**
the parting process of the parting system begins on the right side (r_{K}) of the adhesive tape, the splitting process proceeding transversely to the baseline.

19. Wound roll of an adhesive system or of an adhesive tape according to any of Claims 1 to 15.

## Revendications

1. Système adhésif pour le changement de rouleau au vol ("Système de séparation"), qui convient pour réaliser sur un substrat une liaison adhésive, qui peut de nouveau être séparée, de telle manière qu'il ne subsiste de résidus adhésifs ni sur le côté inférieur (U_{K}) du ruban adhésif (K) ni sur le substrat dans la région de la liaison adhésive séparée, par le fait que le système de séparation (S) comprend une couche en une couche ou en une pièce séparable à plat, deux couches contrecollées l'une sur l'autre et décollables l'une de l'autre et/ou une couche de nouveau détachable d'une autre couche du ruban adhésif,
dans lequel le système de séparation (S) comprend de son côté un support (T) ("Support de système"), qui est muni sur son côté supérieur (O_{T}) et son côté inférieur (U_{T}) respectivement d'une couche de masse adhésive (M_{O}, M_{U}) et peut être séparé ou décollé à plat,
dans lequel le support de système (T) est un papier à une couche ou un composite d'au moins deux couches de papier, un composite d'au moins deux couches de feuille ou un composite d'au moins une couche de papier et au moins une couche de feuille,
dans lequel au moins le bord de limitation droit (r_{S}) du système de séparation (S) est formé sur le côté inférieur (U_{K}) du ruban adhésif sous la forme d'une courbe (F) ("courbe droite") s'étendant le long d'une ligne de base rectiligne (X), et qui est **caractérisée par** une succession de parties de courbe ascendantes (s) et descendantes (f),
de telle manière qu'entre une partie de courbe ascendante respective (s) et une partie de courbe descendante (f) lui succédant dans une direction préférée (v) il se forme dans la région de la courbe formée par ces deux parties de courbe un point situé le plus loin à droite (Eₘₐₓ) ("Maximum") ou une multiplicité de points directement voisins situés le plus à droite (Bₘₐₓ) ("Zone de maximum"),
et de telle manière qu'entre la partie de courbe descendante respective (f) et une partie de courbe ascendante (s) lui succédant dans la direction préférée (v) il se forme dans la région de la courbe formée par ces deux parties de courbe un point situé le plus loin à gauche (Eₘᵢₙ) ("Minimum") ou une multiplicité de points directement voisins situés le plus à gauche (Bₘᵢₙ) ("Zone de minimum"),
dans lequel, pour la multiplicité des régions de la courbe (R) formées par une partie de courbe ascendante respective (s), un maximum (Eₘₐₓ) lui succédant respectivement ou une zone de maximum (Bₘₐₓ) lui succédant respectivement dans la direction préférée (v) et une partie de courbe descendante (f) lui succédant de nouveau respectivement dans la direction préférée (v) ("région de la courbe saillante à droite"), la pente dans la partie de courbe ascendante (s) est plus faible que la pente dans la partie de courbe descendante (f) lui succédant dans la direction préférée (v), dans lequel la pente (au sens du présent document) d'une partie de courbe signifie la valeur de la pente d'une droite ("droite de pente") passant par les deux points de la courbe limitant la partie de courbe.

2. Ruban adhésif pour le changement de rouleau au vol avec un bord de limitation gauche (l_{K}) et droit (r_{K}), comprenant au moins un support principal (H) et une première couche de masse autoadhésive (M) sur le côté supérieur (O_{K}) du ruban adhésif (K), dans lequel il est prévu sur le côté inférieur (U_{K}) du ruban adhésif (K) au moins un système de séparation selon la revendication 1.

3. Ruban adhésif selon l'une quelconque des revendications précédentes, **caractérisé en ce qu'**au moins le bord de limitation droit (r_{K}) du système de séparation (S) est réalisé sous la forme d'une courbe (F) s'étendant le long d'une ligne de base rectiligne (X) avec une multiplicité de maxima (Eₘₐₓ) et de minima (Eₘᵢₙ), dans lequel la droite de pente (G_{f}) entre un minimum respectif (Eₘᵢₙ) et le maximum (Eₘₐₓ) de la courbe (F) directement suivant le long de la direction préférée (v) de la ligne de base (X) présente une pente plus faible que la droite de pente (Gₛ) entre ce maximum (Eₘₐₓ) et le minimum (Eₘᵢₙ) lui succédant de nouveau directement.

4. Ruban adhésif selon l'une quelconque des revendications précédentes, **caractérisé en ce que** la ligne de base (X) est parallèle à la direction longitudinale du ruban adhésif (direction x).

5. Ruban adhésif selon l'une quelconque des revendications précédentes, **caractérisé en ce que** le bord de limitation gauche (l_{S}) opposé au bord de limitation droit (r_{S}) du système de séparation (S) est réalisé sous la forme d'une courbe (F*) qui résulte du déplacement parallèle de la courbe (F) formant le bord de limitation droit (r_{S}) du système de séparation (S) le long d'une ligne tracée perpendiculairement à la ligne de base (X).

6. Ruban adhésif selon la revendication 4, **caractérisé en ce que** le bord de limitation gauche (l_{S}) opposé au bord de limitation droit (r_{S}) du système de séparation (S) est réalisé sous la forme d'une courbe (F^{#}), qui résulte du déplacement parallèle de la courbe (F) formant le bord de limitation droit (r_{S}) du système de séparation (S) le long d'une ligne tracée perpendiculairement à la ligne de base (X) et du déplacement longitudinal simultané dans la direction de la ligne de base (X).

7. Ruban adhésif selon l'une quelconque des revendications 1 à 5, **caractérisé en ce que** le système de séparation (S) comprend une masse de polymère, qui réalise la liaison adhésive.

8. Ruban adhésif selon la revendication 7, **caractérisé en ce que** le polymère est appliqué par une technique d'impression.

9. Ruban adhésif selon la revendication 8, **caractérisé en ce que** le polymère est appliqué par sérigraphie ou par impression en creux.

10. Ruban adhésif selon l'une quelconque des revendications précédentes, **caractérisé en ce que** la courbe droite (F) est mathématiquement différentiable dans la région de ses maxima (Eₘₐₓ) .

11. Ruban adhésif selon l'une quelconque des revendications précédentes, **caractérisé en ce que** la courbe droite (F) est toujours différentiable.

12. Ruban adhésif selon l'une quelconque des revendications précédentes, **caractérisé en ce que** la courbe droite (F) présente une succession périodique de maxima (Eₘₐₓ) et de minima (Eₘᵢₙ) respectivement identiques.

13. Ruban adhésif selon l'une quelconque des revendications précédentes, **caractérisé en ce que** la masse adhésive formant la couche de masse adhésive (M) sur le côté supérieur (O_{K}) du ruban adhésif (K) est une masse à base d'acrylate, une masse à base de caoutchouc naturel ou une masse à base de caoutchouc synthétique.

14. Ruban adhésif selon l'une quelconque des revendications précédentes, **caractérisé en ce qu'**il est prévu un ou plusieurs autre(s) système(s) de séparation (T) sur le côté inférieur (U_{K}) du ruban adhésif (K).

15. Ruban adhésif selon la revendication 14, **caractérisé en ce que** les systèmes de séparation (T) sur le côté inférieur (U_{K}) du ruban adhésif ne présentent pas tous la même géométrie.

16. Procédé de liaison de deux bandes plates pendant un changement de rouleau au vol de matériau en bande plate enroulée sur des rouleaux en utilisant un système adhésif ou un ruban adhésif selon l'une quelconque des revendications 1 à 15.

17. Procédé selon la revendication 16, dans lequel on fixe la spire supérieure (11) de bande plate d'un nouveau rouleau avec un ruban adhésif (K) comprenant au moins un système de séparation (S) convenant pour la réalisation d'une liaison adhésive séparable de nouveau sans taches de colle, sur la spire de bande plate (12) sous-jacente, de telle manière qu'une partie d'une masse autoadhésive (M) nécessaire pour la liaison avec la bande plate finissante (13) soit découverte sur le côté supérieur (O_{K}) du ruban adhésif (K), puis on place le nouveau rouleau ainsi équipé à côté d'un ancien rouleau à remplacer presque totalement déroulé et on l'accélère à la vitesse de rotation essentiellement égale à celui-ci, puis on le presse contre l'ancienne bande plate (13), dans lequel la masse autoadhésive découverte (M) du ruban adhésif (K) se colle à l'ancienne bande plate (13) avec des vitesses essentiellement égales des bandes, pendant qu'en même temps le collage réalisé au moyen du système de séparation (S) de la couche de bande plate supérieure (11) sur la couche de bande plate sous-jacente (12) est séparée à plat, de telle manière qu'il ne se trouve aucune zone adhésive découverte après l'opération de séparation, **caractérisé en ce que** l'on utilise un ruban adhésif selon l'une quelconque des revendications 2 à 15.

18. Procédé selon la revendication 16, **caractérisé en ce que** l'opération de séparation du système de séparation commence sur le côté droit (r_{K}) du ruban adhésif, l'opération de séparation se poursuivant transversalement à la ligne de base.

19. Rouleau d'un système adhésif ou d'un ruban adhésif selon l'une quelconque des revendications 1 à 15.
